# EUROPEAN PATENT APPLICATION

(11) **EP 1 768 287 A1**
(43) Date of publication of application: **28.03.2007**
(21) Application number: 04747493.7
(22) Date of filing: 14.07.2004
(51) Int. Cl.: H04J 11/00, H04B 1/707

(54) **MULTICARRIER RECEIVING METHOD AND MULTICARRIER RECEIVING APPARATUS**

(71) Applicant: Fujitsu Ltd., Kawasaki-shi, Kanagawa 211-8588 (JP)
(72) Inventor: BOCQUET, Wladimir, c/o Fujitsu Limited, Kawasaki-shi, Kanagawa 2118588 (JP)
(74) Representative: HOFFMANN EITLE
(86) International application number: PCT/JP2004/010027
(87) International publication number: WO 2006/006238

(57) **Abstract**

In a multi-carrier communication method that receives and demodulates a signal to which a guard interval has been attached for every group of a plurality of multi-carrier transmission symbols, the present invention removes the guard intervals from the received signal, performs Fourier-transformation processing together for the plurality of multi-carrier transmission symbols, estimates channels for sub carriers that correspond to the plurality of multi-carrier transmission symbols, performs channel compensation on the Fourier-transformation results based on the channel-estimation results, performs inverse-Fourier-transformation processing together on the plurality of channel-compensated multi-carrier transmission symbols, performs Fourier-transformation processing on the inverse-Fourier-transformation results for every multi-carrier transmission symbol and demodulates the received signal.

## Description

### Technical Field

The present invention relates to a mul ti-carrier receiving method and multi-carrier receiving apparatus, and more particularly to a multi-carrier receiving method and multi-carrier receiving apparatus in a multi-carrier communication system that receives and demodulates a signal to which a guard interval has been attached to every group of a plurality of multi-carrier-transmission symbols.

### Background Art

The multi-carrier modulation method has gained much attention as a next-generation mobile-communication system. By using the multi-carrier modulation system, not only is it possible to improve high-speed transmission in a wide bandwidth, but by making each of the sub-carriers have a narrow bandwidth, it is possible to reduce the effect of frequency-selective fading.
Also, by using an orthogonal frequency division multiplexing (0FDM) system, not only is it possible to improve the frequency utilization efficiency, but it is also possible to eliminate the effect of inter-symbol interference by using a guard interval for each 0FDM symbol.

The theory of the 0FDM system is to reduce the bit rate of each of the sub carriers, and use many of these low-bit-rate sub carriers to provide high-bit-rate transmission. The frequency bandwidth is divided into small ranges, and each of the ranges is used as the frequency for each of the respective low-bi t-rate sub carriers. The sub carriers are orthogonal to each other. In order to obtain these characteristics, the sub-carrier frequencies must be separated by a multiple of the inverse of the symbol period. The multi-carrier modulation system does not receive the effect of frequency-selective fading, however, channels are estimated for each sub carrier, and channel compensation must be performed.

### - 0FDM Transmission Apparatus

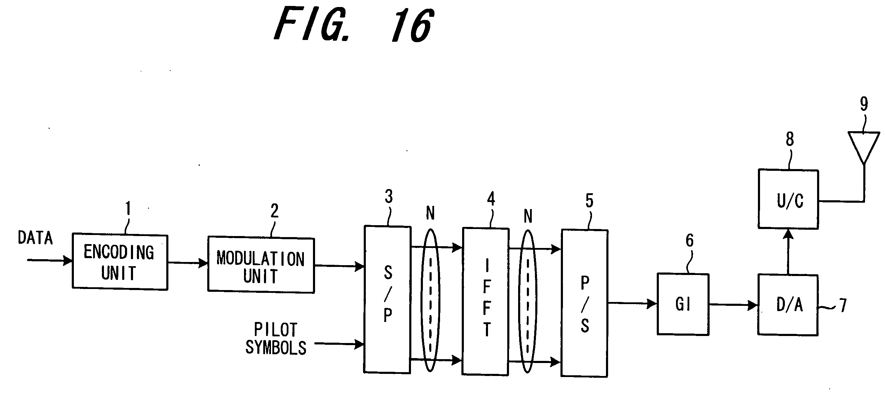

FIG. 16 is a block diagram showing the construction of an 0FDM transmission apparatus that uses a conventional 0FDM transmission system. An encoding unit 1 encodes high-speed binary data using convolution code or turbo code, for example, and after interleaving, a modulation unit 2 performs modulation, such as BPSK, QPSK or 16-QAM modulation of the encoded data. Next, a serial-to-parallel conversion unit (S/P conversion unit) 3 converts the modulated data symbols and pilot symbols to parallel low-speed modulated data sequences having N symbols, and generates N number of sub-carrier components.
An N-point inverse fast Fourier-transformation unit 4 performs inverse-fast-Fourier transformation (IFFT) on the N number of modulated symbols (sub-carrier components) that are output from the S/P conversion unit 3 and performs parallel output of N number of time-domain-signal components. A parallel-to-serial conversion unit (P/S conversion unit) 5 converts the N number of time-domain-signal components that were obtained from the IFFT process to a serial signal and outputs the result as an 0FDM symbol. A guard-interval-insertion unit 6 inserts a guard interval Gl into this 0FDM symbol, and a digital-to analog conversion unit (D/A) 7 converts the signal that is output from the guard-interval-insertion unit 6 to an analog signal, after which a radio unit 8 performs up-conversion of the frequency of the baseband signal to that of a radio signal, then amplifies and transmits that signal from an antenna 9. The case of employing fast-Fourier transformation FFT and inverse-fast-Fourier transformation IFFT for the Fourier transformation and inverse Fourier transformation will be explained below, however, it is also possible to employ discrete-Fourier transformation DFT and inverse-discrete transformation IDFT; with the same being true in the embodiments.

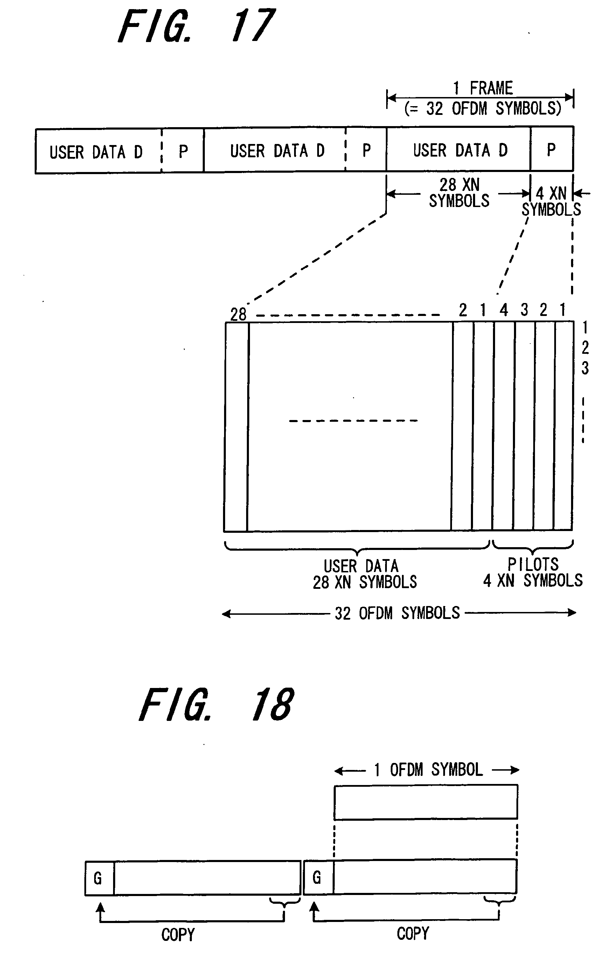

FIG. 17 is a drawing showing frame configuration, where a pilot P is time multiplexed in front of the transmission data for one frame (the pilot P can be dispersed inside the frame). By taking the pilot per frame to be 4 x N symbols, and the transmission data to be 28 x N symbols, the N symbols of the pilot are output as parallel data the first 4 times from the S/P conversion unit 3, and after that, the N symbols of the transmission data are output as parallel data the next 28 times. As a result, during the period of one frame, it is possible to time multiplex the pilot onto N number of sub carriers and transmit them 4 times, and then on the receiving side, it becomes possible to use the pilot to estimate a channel and perform channel compensation (fading compensation) for each sub carrier.
FIG. 18 is a drawing explaining the insertion of guard intervals. At time of the insertion of a guard interval, the IFFT output signal that corresponds to N number of sub-carrier samples (= 1 0FDM symbol) is regarded as one unit, and the end portion of that 0FDM symbol is copied and placed at the beginning of the 0FDM symbol. By inserting the guard interval, it becomes possible to eliminate the effect of inter-symbol interference due to multi paths.

When considering an 0FDM symbol that transmits N number of symbols ${s}_{n}^{i} ⁢ \left(n=0∼N-1\right)$ in the ith 0FDM symbol period by way of N number of sub carriers, the baseband 0FDM signal that is transmitted in the ith block is expressed by the following equation. $\begin{matrix}{x}_{k}^{i} = \frac{1}{\sqrt{N}} ⋅ {\sum }_{n = 0}^{N - 1} {s}_{n}^{i} ⋅ exp \left\{j⁢\frac{2 ⁢ πnk}{N}\right\} & 0 \leq k < N\end{matrix}$
Here, ${s}_{n}^{i}$ is the N number of symbols that are transmitted in the ith 0FDM symbol, N is the block size, and $j = \sqrt{- 1} .$

In order to realize an 0FDM system that has no ISI (inter-symbol interference) or ICI (inter-channel interference), a guard interval is inserted in each of the 0FDM symbols. Depending on the configuration of the guard intervals (for example a cyclic prefix CP), the delayed signal, having a delay time that is less than the guard-interval period G, does not cause the ISI. A transmission signal having guard intervals can be expressed by the following equation. ${{x}^{˜}}_{k}^{i} = { \begin{matrix}{x}_{N - G + k}^{i} & 0 \leq k < G \\ {x}_{k - G}^{i} & G \leq k < N + G\end{matrix}$
Here, G is the length of the guard intervals, 0 ≦ k < G is the guard-interval period, and G ≦ k < N + G is the data period.

### - Frequency-selective Channel

Supposing that a propagation channel is constructed from P number of paths (channels) having different amplitudes and delay characteristics, the impulse response can be expressed by the following equation. $h \left(t, ⁢, τ\right) = {\sum }_{p = 0}^{P - 1} {α}_{p} \left(t\right) ⋅ δ ⁢ \left(τ-{τ}_{p}\right)$
Here, αₚ and τₚ are the channel gain and delay time of the pth path. Furthermore, in order for simulation, the total channel power is taken to be equal to '1'. Actually, in the case where coherent detection is possible, or in other words, when timing is perfect, there is never any interference that is greater than one 0FDM symbol. In the frequency domain, the channel-transmission function H(f,t) is expressed by the following equation. $H \left(f, ⁢, t\right) = {\sum }_{p = 0}^{P - 1} {α}_{p} ⋅ exp \left[-j⁢2⁢πf⁢{τ}_{p}\right]$

### - 0FDM Receiving Apparatus

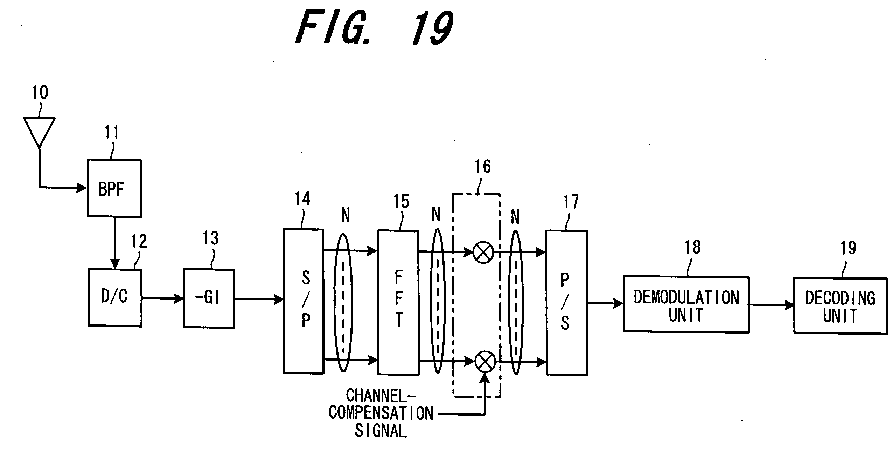

FIG. 19 is a block diagram showing the construction of an 0FDM receiving apparatus that uses a conventional 0FDM receiving system. A bandpass filter (BPF) 11 filters a signal received from an antenna 10 and removes the unnecessary frequency component, then a down converter (D/C) 12 converts the frequency from a radio signal to a baseband frequency, an analog-to-digital conversion unit (not shown in the figure) converts that baseband signal from an analog to a digital signal, and a guard-interval-removal unit 13 removes the guard intervals. An S/P conversion unit 14 converts the time-domain-signal from which guard intervals have been removed to N number of parallel data, and inputs the result to an N=point Fourier-transformation unit 15. The Fourier-transformation unit 15 performs N-point FFT processing on the N number of time-domain-signal components and outputs N number of sub-carrier components. In order to reduce the effect of channel distortion, a channel-estimation unit (not shown in the figure) performs well-known channel-estimation calculation and estimates channels for the sub carriers, then generates channel-compensation values for the frequency range of each sub carrier using a minimum mean square error (MMSE) method or zero forcing (ZF) coefficient method, then a channel-compensation unit 16 multiplies the N number of FFT transformation results by the channel-compensation values to perform channel compensation. Finally, a P/S conversion unit 17 serially outputs in order the N number of channel-compensated sub-carrier components, a demodulation unit 18 performs demodulation such as BPSK, QPSK or 16QAM demodulation on the input signal, and a decoding unit deinterleaves the signal after which it decodes the input signal and outputs the result.

In the case where the length of the guard interval is greater than the maximum delay, the received baseband signal is expressed by the following equation (refer to non-patent document 1). $\begin{matrix}{r}_{k}^{i} = {\sum }_{p = 0}^{P - 1} {α}_{p} ⋅ {x}_{k - {τ}_{p}}^{i} + {{n}^{˜}}_{k}^{i} & 0 \leq k < N\end{matrix}$
He re, ${\overline{r}}^{i} = {\left[{r}_{0}…{r}_{N - 1}^{i}\right]}^{T}$ and ${{n}^{˜}}^{i} = {\left[{{n}^{˜}}_{0}^{i}…{{n}^{˜}}_{N - 1}^{i}\right]}^{T}$ are the rece i ved signal and AWGN (Additive White Gaussian Noise), respectively, of the ith 0FDM symbol after guard intervals have been removed. Finally, demodulation is performed and the information bits are evaluated.

As explained above, channel fluctuation is corrected for each sub carrier. In the case of IEEE standards 802. 11g and 802. 11a, the dimension for IFFT and FFT is N = 64(64 sub carriers), and of these, only 48 sub carriers are used for the transmission of data symbols and 4 sub carriers are used for synchronizing the data frames in the frequency range. Twelve of the sub carriers are not used. Channel estimation and compensation is performed for the sub carriers that are used.

### - MC-CDMA Transmission Apparatus

In multi-carrier CDMA (MC-CDMA), CDMA technology is built into the 0FDM modulation in order for multiple access. Data from each user is spread by orthogonal spreading code in the frequency domain and multiplexed with different spread data from other users.

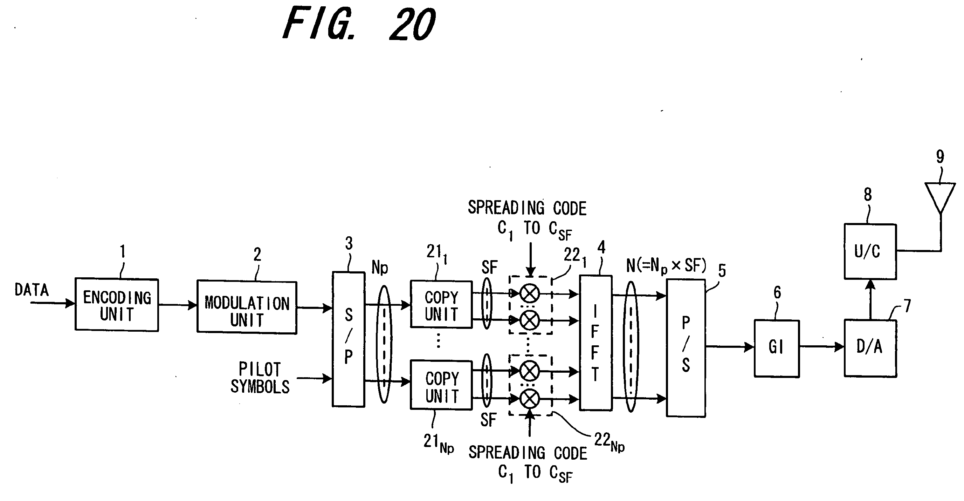

FIG. 20 is a block diagram showing the construction of an MC-CDMA transmission apparatus, where the same reference numbers are used for parts that are identical to those of the 0FDM transmission apparatus shown in FIG. 16. This MC-CDMA transmission apparatus differs in that: (1) there are Np number of copy units 21₁ to 21_{Np} that copy SF number at a time each of the Np number of data that are output from the S/P conversion unit 3, and (2) there are Np number of spreading units 22₁ to 22_{Np} that respectively multiply the SF number of data that are output from each copy unit by spreading codes C, to C_{SF} (spreading code having a spreading factor SF) that are unique to each user.

In other words, an encoding unit 1 encodes high-speed binary data using convolution code or turbo code for example, and a modulation unit 2 modulates the encoded data using BPSK, QPSK or 16-QAM modulation. Next, a serial-to-parallel conversion unit (S/P conversion unit) 3 converts the modulated data symbols and pilot symbols to Np number of parallel low-speed modulated data sequences, and outputs the result.
Np number of copy units 21₁ to 21_{Np} copy and output SF number at a time each of the Np number of symbols that are output in parallel from the S/P conversion unit 3, Np number of spreading units 22₁ to 22_{Np} respectively multiply the SF number of symbols that are output from each copy unit by spreading codes (spreading code having a spreading factor SF) C, to C_{SF} that are unique to each user, an inverse-Fourier-transformation unit 4 performs IFFT processing on N (N = Np x SF) number of sub-carrier components, and a P/S conversion unit 5 serially outputs in order N number of time-domain-signal components (0FDM symbol).
A guard-interval-insertion unit 6 inserts a guard interval into the 0FDM symbol, a digital-to-analog conversion unit (D/A) converts the signal that is output from the guard-interval-insertion uni t 6 to an analog signal, and a radio unit 8 performs up-conversion of the frequency from a baseband signal to a radio signal, after which it amplifies the signal and transmits it into space from an antenna 9.

### - MC-CDMA Receiving Apparatus

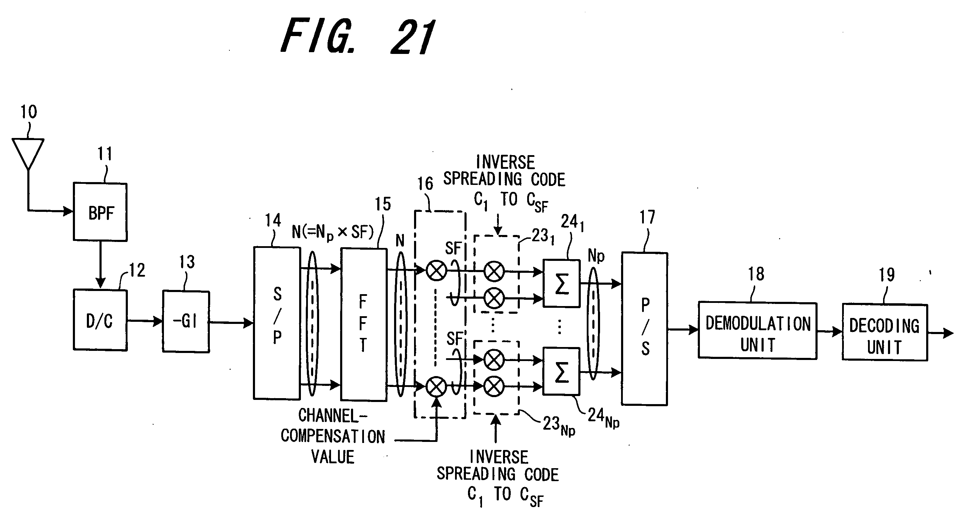

FIG. 21 is a block diagram showing the construction of a conventional MC-CDMA receiving apparatus, where the same reference numbers are used for parts that are identical to those of the 0FDM receiving apparatus shown in FIG. 19. The MC-CDMA receiving apparatus differs in that: (1) there are Np number of inverse-spreading units 23₁ to 23_{Np} that separate the N (N = Np x SF) number of sub-carrier components that are output from the channel-compensation unit 16 SF number by SF number at a time into Np number of groups, and multiplies each group respectively by spreading codes C, to C_{SF} (spreading code having a spreading factor SF) that are unique to each user; and (2) there are Np number of adder units 24₁ to 24_{Np} that add the SF number of inverse-spread data that are output from each inverse-spreading unit 23₁ to 23_{Np}.
In other words, a bandpass filter (BPF) 11 filters a signal that is received from the antenna 10 and removes the unnecessary frequency component, then a down-conversion unit (D/C) 12 converts the frequency of the radio signal to a baseband frequency, an analog-to-digital conversion unit (not shown in the figure) converts the baseband signal from analog to digital, and a guard-interval-removal unit 13 removes the guard intervals. An S/P conversion unit 14 converts the time-domain-signal from which the guard intervals have been removed to N number of parallel data, and inputs the result into an N-point Fourier-transformation unit 15. The Fourier-transformation unit 15 performs FFT processing on the N number of time-domain-signal components and outputs N number of sub-carrier components. A channel-estimation unit (not shown in the figure) uses pi lot symbols to estimate channels for each sub carrier, and using these estimated channel values generates channel-compensation values by any one of an orthogonal restoring combining (ORC) method, equal gain combining (EGC) method, maximum ratio combining (MRC) method, MMSE method and ZF method, and a channel-compensation unit multiplies the N (N = Nc x SF) number of FFT processing results by the channel compensation values to perform channel compensation.

The Np number of inverse spreading units 23₁ to 23_{Np} separate the N (N = Np x SF) number of sub-carrier components that are output from the channel-compensation unit 16 SF number by SF number at a time into Np number of groups and performs inverse spreading by respectively multiplying each group by spreading codes C₁ to C_{SF} (spreading code having a spreading factor SF) that are unique to each user, and adder units 24₁ to 24_{Np} add each of the SF number of inverse-spread data that are output from each of the inverse-spreading units 23₁ to 23_{Np} and output Np number of data. A P/S conversion unit 17 serially outputs in order Np number of inverse-spread symbols, then a demodulation unit 18 demodulates the input symbols using BPSK, QPSK or 16QAM demodulation, and a decoding unit 19 performs deinterleaving after which it decodes and outputs the input data. The 0FDM transmission system is a special case of the MC-CDMA transmission system in which SF = 1.

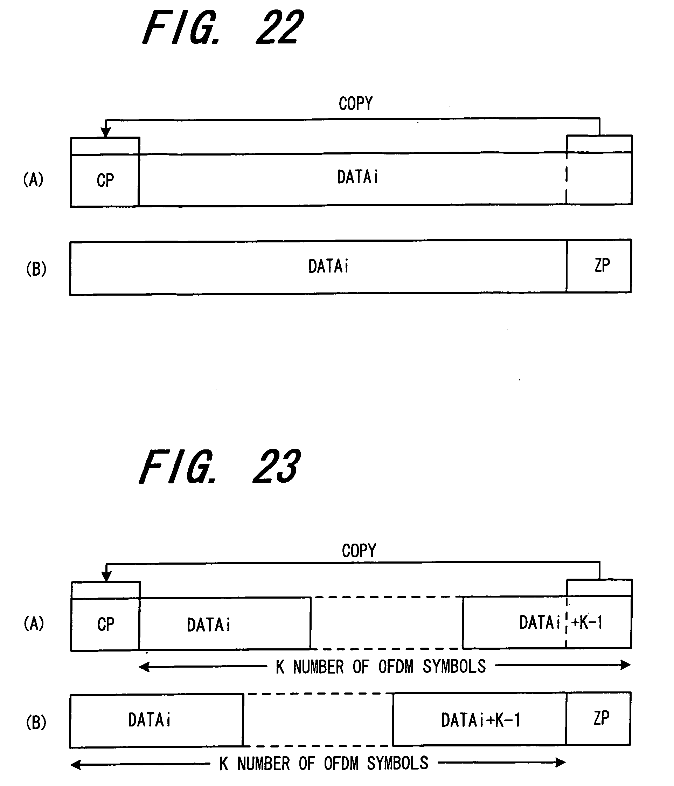

In the explanation above, and as shown in (A) of FIG. 22, a cyclic prefix CP is inserted as a guard interval by copying the end portion of an 0FDM symbol at the beginning of the 0FDM symbol, however, as shown in (B) of FIG. 22, it is also possible to insert a zero-padding section ZP as a guard interval in which a specified bit length at the end of the 0FDM symbol is filled in with '0's. Also, it is not shown in the figures, however, it is also possible to insert a unique word having a known bit length as a guard interval in the place of inserting '0' s.
As described above, by inserting guard intervals for each 0FDM symbol, it is possible to eliminate the effect of inter-symbol interference due to multi paths (delayed waves), however, there is a problem in that the data-transmission efficiency becomes poor.

In order to prevent the data-transmission efficiency from becoming poor, methods have been proposed such as shown in (A) of FIG. 23 in which a cyclic prefix CP is inserted as a guard interval for every K number of 0FDM symbols, or as shown in (B) of FIG. 23 in which a zero-padding section is inserted as a guard interval for every K number of 0FDM symbols (refer to non-patent document 2).
However, in the document referenced above, an 0FDM transmission apparatus is disclosed that inserts a guard interval for every K number of 0FDM symbols and performs transmission, however it does not describe the construction of an 0FDM receiving apparatus or a method of performing channel estimation.

Taking the aforementioned into consideration, the objective of the present invention is to provide a multi-carrier receiving method and apparatus, and a channel-estimation method and apparatus for a multi-carrier communication system that inserts a guard interval for every K number of multi-carrier transmission symbols before performing transmission.
Another objective of the present invention is to improve the data transmission on efficiency by inserting a guard interval for every K number of multi-carrier transmission symbols and transmitting them.
Still another objective of the present invention is to effectively perform channel compensation and accurately demodulate transmission data in a multi-carrier communication system that inserts a guard interval for every K number of multi-carrier transmission symbols before performing transmission.

### Non-patent Document 1:

Yee N.,J.P. Linnartz and G.Fettweis, "Multi-carrier CDMA in Indoor Wireless Radio Networks," IEICE Trans. Comm., E77-B pp900-904, July 1994. Non-patent Document 2:
1-5 December San Francisco, USA, IEEE Communications Society, WIRELESS COMMUNICATIONS SYMPOSIUM "On the Comparison between Conventional 0FDM and MSE-0FDM System" Xianbin Wang, Yiyan Wu and Jean-Yves Chouinard, pp35-39.

### Disclosure of the Invention

A first feature of the present invention is a multi-carrier receiving method in a multi-carrier communication system that receives and demodulates a signal to which a guard interval has been attached for every group of a plurality of multi-carrier transmission symbols that comprises steps of removing guard intervals from a received signal, performing Fourier-transformation processing for every group of a plurality of multi-carrier transmission symbols, estimating channels for sub carriers that correspond to the plurality of multi-carrier transmission symbols, performing channel compensation on the Fourier-transformation results based on the channel-estimation results, performing inverse-Fourier-transformation processing together for every group of the plurality of channel-compensated multi-carrier transmission symbols, performing Fourier-transformation processing on the inverse-Fourier-transformation results for every multi-carrier transmission symbol and demodulates the received signal.
In the method described above, the step of estimating channels includes sub-steps of estimating channels for N number of sub carriers using a multi-carrier transmission symbol from which the guard interval has been removed, and interpolating (K-1) number of estimated channel values between the adjacent estimated values to obtain estimated channel values for K · N number of sub carriers that correspond to the aforementioned plurality of multi-carrier transmission symbols. Also, the step of estimating channels includes sub-steps of estimate channels for N number of sub carriers using a multi-carrier transmission symbol from which the guard interval has been removed, then performing N-point inverse-Fourier-transformation processing on the estimated channel values for those N number of sub carriers and creating a delay profile that indicates the mul ti-path receiving levels, after which making the receiving levels of paths that exceed the guard-interval period GI of that delay profile zero and performing K · N-point Fourier-transformation processing on that delay profile that has been made zero to estimate channels for K · N number of sub carriers that correspond to the plurality of multi-carrier transmission symbols.

A second feature of the present invention is a multi-carrier receiving apparatus in a multi-carrier communication system that receives and demodulates a signal to which a guard interval has been attached for every group of a plurality of (=K number of) multi-carrier transmission symbols.
A first multi-carrier receiving apparatus comprises: a guard-interval removal unit that removes guard intervals from a received signal; a Fourier-transformation unit that performs Fourier-transformation processing together on each group of a plurality of multi-carrier transmission symbols from which a guard interval has been removed; a channel-estimation/compensation unit that estimates channels for sub carriers that correspond to the plurality of multi-carrier transmission symbols and performs channel compensation based on the channel-estimation results; an inverse-Fourier-transformation unit that performs inverse Fourier transformation together on the plurality of channel-compensated multi-carrier transmission symbols; a Fourier-transformation unit that performs Fourier-transformation processing on the inverse-Fourier-transformation results for each multi-carrier transmission symbol; and a demodulation unit that demodulates the transmission data based on those Fourier-transformation results.
A second multi-carrier receiving apparatus comprises: a guard-interval removal unit that removes guard intervals from a received signal; a Fourier-transformation unit that performs Fourier-transformation processing together on each group of a plurality of multi-carrier transmission symbols from which a guard interval has been removed; a channel-estimation/compensation unit that estimates channels for sub carriers that correspond to the plurality of multi-carrier transmission symbols and performs channel compensation based on the channel-estimation results; a processing unit that performs inverse Fourier transformation together on the plurality of channel-compensated multi-carrier transmission symbols, as well as performs Fourier-transformation processing on the inverse-Fourier-transformation results for each multi-carrier transmission symbol; and a demodulation unit that demodulates the transmission data based on those processing results.
A third multi-carrier receiving apparatus comprises: a guard-interval removal unit that removes guard intervals from a received signal; a processing unit that performs Fourier-transformation processing together on each group of a plurality of multi-carrier transmission symbols from which a guard interval has been removed, estimates channels for sub carriers that correspond to the plurality of multi-carrier transmission symbols, performs channel compensation based on the channel-estimation results, performs inverse Fourier transformation together on the plurality of channel-compensated multi-carrier transmission symbols, and performs Fourier-transformation processing on the inverse-Fourier-transformation results for each multi-carrier transmission symbol; and a demodulation unit that demodulates the transmission data based on those processing results.
In the multi-carrier receiving apparatuses described above, the channel-estimation/compensation unit comprises: means for estimating channels for N number of sub carriers using a multi-carrier transmission symbol from which a guard interval has been removed; and means for interpolating (K-1) number of estimated channel values between the adjacent estimated channel values and obtaining estimated channel values for K · N number of sub carriers that correspond to said plurality of multi-carrier transmission symbols.
Also, in the multi-carrier receiving apparatuses described above, the channel-estimation/compensation unit comprises: means for estimating channels for N number of sub carriers using a multi-carrier transmission symbol from which a guard interval has been removed; means for performing N-point inverse-Fourier-transformation processing on the estimated channel values for N number of sub carriers and creating a delay profile that indicates the multi-path receiving levels; means for making the receiving level of paths that exceed the guard-interval period GI of the delay profile zero; and means for performing K · N-point Fourier-transformation processing on the delay profile that has been made zero to estimate channels for K · N number of sub carriers that correspond to said plurality of multi-carrier transmission symbols.

### Brief Description of the Drawings

FIG. 1 is a block diagram showing the construction of an 0FDM transmission apparatus in an 0FDM communication system that inserts a guard interval for every K number of multi-carrier transmission symbols before performing transmission.
FIG. 2 is a block diagram showing the construction of an 0FDM receiving apparatus in an 0FDM communication system that inserts a guard interval for every K number of multi-carrier transmission symbols before performing transmission.
FIG. 3 is a block diagram showing the construction of a channel-estimation unit.
FIG. 4 is a drawing explaining a process for averaging estimated channel values.
FIG. 5 is a drawing explaining a delay profile.
FIG. 6 is a drawing explaining a process for inserting zeros.
FIG. 7 is a flowchart showing a channel-estimation process.
FIG. 8 is a block diagram showing different construction of a channel-estimation unit.
FIG. 9 is a drawing explaining a process for interpolating estimated channel values.
FIG. 10 is a block diagram showing the construction of an MC-CDMA transmission apparatus.
FIG. 11 is a block diagram showing the construction of an MC-CDMA receiving apparatus.
FIG. 12 is a block diagram showing the construction of a second embodiment of an MC-CDMA receiving apparatus.
FIG. 13 is a drawing explaining the Fourier transformation process of a second embodiment of an MC-CDMA receiving apparatus.
FIG. 14 is a block diagram showing the construction of a third embodiment of an MC-CDMA receiving apparatus.
FIG. 15 is a drawing explaining the Fourier transformation process of a third embodiment of an MC-CDMA receiving apparatus.
FIG. 16 is a block diagram showing the construction of an 0FDM transmission apparatus in a conventional 0FDM transmission system.
FIG. 17 is a drawing showing the configuration of a frame.
FIG. 18 is a drawing explaining a process for inserting guard intervals.
FIG. 19 is a block diagram showing the construction of an 0FDM receiving apparatus in a conventional 0FDM receiving system.
FIG. 20 is a block diagram showing the construction of a conventional MC-CDMA transmission apparatus.
FIG. 21 is a block diagram showing the construction of a conventional MC-CDMA receiving apparatus.
FIG. 22 is a drawing explaining a conventional process for inserting guard intervals (cyclic prefixes, zero-padding sections).
FIG. 23 is a drawing explaining a proposed process for inserting guard intervals (cyclic prefixes, zero-padding sections).

### Best Mode for Carrying Out the Invention

### (A) Embodiment 1

### (a) 0FDM Transmission Apparatus

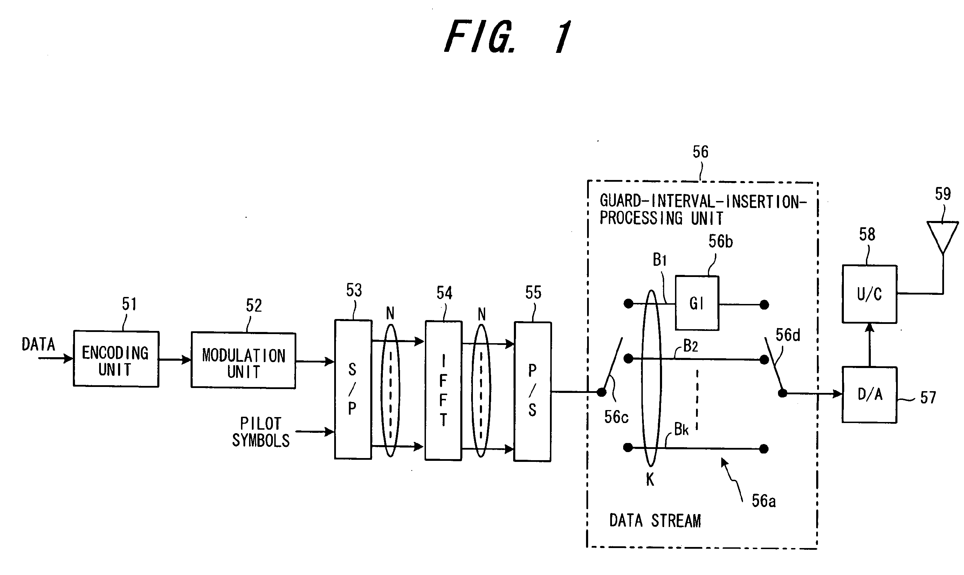

FIG. 1 is a block diagram showing the construction of an 0FDM transmission apparatus in an 0FDM communication system that inserts guard intervals for every K number of multi-carrier transmission symbols before performing transmission.
An encoding unit 51 encodes high-speed binary data using convolution code or turbo code, for example, and a modulation unit 52 performs interleaving, after which it modulates the encoded data using a modulation method such as BPSK, QPSK or 16-QAM. Next, a serial-to-parallel conversion unit (S/P conversion unit) 53 converts the modulated data symbols and pi lot symbols to a parallel low-speed modulated data sequence of N symbols and generates N number of sub-carrier components.

An N-point inverse-fast-Fourier-transformation unit 54 performs inverse-fast-Fourier transformation (IFFT) on the N number of modulated signals (sub-carrier components) that are output from the S/P conversion unit 53, and outputs N number of time-domain-signal components in parallel. A P/S conversion unit 55 converts the N number of time-domain-signal components that are obtained from IFFT processing to a serial signal and outputs the result as an 0FDM symbol. In other words, the 0FDM symbol comprises N number of symbols. The inverse-fast-Fourier-transformation unit 54 of this example uses an apparatus that performs IFFT (inverse fast Fourier transformation), however, an apparatus that performs IDFT (inverse direct Fourier transformation) could also be used.
A guard-interval-insertion-processing unit 56 inserts a guard interval consisted of G number of symbols for each group of K number of 0FDM symbols, and comprises a buffer unit 56a having a capacity of (K · N + G), and a guard-interval-insertion unit 56b. A switch 56c inputs the K number of 0FDM symbols that are output from the P/S conversion unit 55 in order to buffers B₁ to B_{K}, and as shown in (A) of FIG. 23, the guard-interval-insertion unit 56b inserts a cyclic prefix CP as a guard interval Gl by copying the last G number of symbols of the Kth 0FDM symbol to in front of the first 0FDM symbol. Next, a switch 56d reads the 0FDM symbols with guard interval attached in order from the buffers B₁ to B_{K} and inputs them to a digital-to-analog (DA) conversion unit 57.
The DA conversion unit 57 converts the 0FDM symbols that were input from the guard-interval-insertion-processing unit 56 to an analog signal, and a radio unit 58 performs up-conversion of the frequency from a baseband signal to a radio signal, after which it amplifies the signal and transmits it from an antenna 59
The construction of this 0FDM transmission apparatus was explained as using inverse-fast-Fourier transformation (IFFT) by the inverse-fast Fourier-transformation unit 54, however, it is also possible to use inverse-discrete-Fourier transformation (IDFT).

### (b) 0FDM Receiving Apparatus

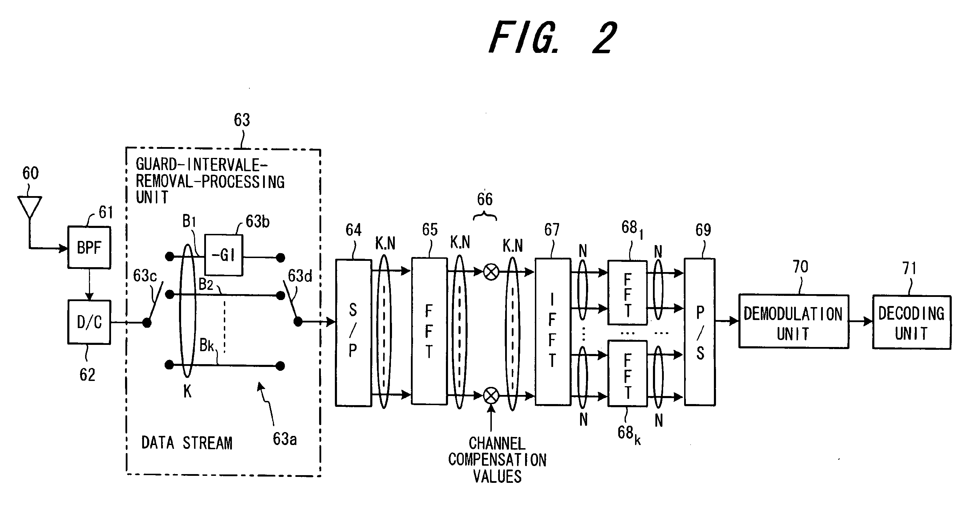

FIG. 2 is a block diagram showing the construction of an 0FDM receiving apparatus in an 0FDM communication system that inserts guard intervals for every K number of multi-carrier transmission symbols before performing transmission.
A bandpass filter (BPF) 61 filters the signal received from an antenna 60 and removes the unneeded frequency component, then a down-converter (D/C) 62 converts the frequency of the radio signal to a baseband frequency, and an analog-to-digital conversion unit (not shown in the figure) converts that baseband signal from an analog signal to a digital signal. A guard-interval-removal-processing unit 63 removes the guard interval that was inserted into the received signal, and comprises a buffer unit 63a having a capacity of (K · N + G) symbols, and guard-interval-removal unit 63b. A switch 63c inputs the K number of input 0FDM symbols in order into buffers B₁ to B_{K}, and the guard-interval-removal unit 63b removes the guard interval GI that was inserted in front of the first 0FDM symbol, then a switch 63d reads the K number of 0FDM symbols in order from the buffers B₁ to B_{K}, and inputs them to a S/P conversion unit 64.
The S/P conversion unit 64 converts the K · N-point time-domain-signal components from which the guard interval has been removed to K · N number of parallel data, and inputs the result to a K · N-point Fourier-transformation unit 65. The Fourier-transformation unit 65 performs FFT on the K · N number of time-domain-signal components, and outputs K · N number of sub-carrier components. A channel-estimation unit (described later) performs channel estimation in order to reduce the effect of channel distortion, and estimates channels for K · N number of sub carriers, then generates a channel-compensation value in the frequency domain for each sub carrier using a method such as the minimum mean square error (MMSE) method, or zero forcing (ZF) coefficient method, and a channel-compensation unit 66 multiplies the K · N number of FFT processing results by the channel-compensation values to perform channel compensation.

Next, an inverse-Fourier-transformation unit 67 performs K · N-point IFFF processing all together for the K · N number of channel-compensated sub-carrier components (K number of 0FDM symbols), and outputs K · N-point time-domain-signal components in parallel. Next, K number of N-point Fourier-transformation units 68₁ to 68_{K} divide up the K · N number of time-domain-signal components that were output in parallel from the inverse-Fourier-transformation unit 67 into divisions of N number of components each, and perform N-point FFT processing on each division. As a result, each Fourier-transformation unit 68₁ to 68_{K} generates N number of sub-carrier components. This total of K · N number of sub-carrier components corresponds to the K · N number of transmission symbols that were transmitted by the transmitting side.
A P/S conversion unit 69 serially outputs in order K number of groups of N number of symbols that were input from the Fourier-transformation uni ts 68₁ to 68_{K}, then a demodulation unit 70 demodulates the input signal using a demodulation method such as BPSK, QPSK or 16QAM, and a decoding unit 71 deinterleaves the signal after which it decodes and outputs the input data.

To summarize the above description, in an 0FDM receiving apparatus, an S/P conversion unit 64 converts data to a parallel stream, after which K · N-point FFT processing is performed. Next, the effect due to the channel on each sub carrier is reduced by channel compensation, and finally, before demodulating and decoding the received signal, K · N-point IFFT is performed, and the signal is divided into K number of data streams, and N-point FFT calculation is performed for each of the K number of data streams.
The theory of the 0FDM communication system of this invention is to compensate for channel fluctuation immediately after performing K · N-point FFT calculation in order to reduce the impact of interfering components. Here, K is the insertion period of the guard intervals and N is the dimension of IFFT in the transmission unit. In the receiving unit, by performing K · N -point FFT calculation, it is possible to reduce the effect of multi paths without inter-channel interference (ICI) occurring at all.
In the description above, a cyclic prefix is inserted as a guard interval for every K number of symbols, however, it is also possible to insert a zero-padding section or a unique word having a specified length for every K number of symbols, or even insert a combined cyclic prefix CP and unique word.
Moreover, in the construction of the 0FDM receiving apparatus, it is possible for the K · N-point Fourier-transformation unit 65 to perform K · N-point DFT instead of K · N-point FFT, the inverse-Fourier-transformation unit 67 to perform IDFT instead of IFFT and for the Fourier-transformation units 68₁ to 68_{K} to perform DFT instead of FFT.

### (c) Mathematical Description

The main feature of the present invention is that in order to completely avoid inter-symbol interference or inter-channel interference, FFT processing is performed together for all of the K number of 0FDM symbols after the guard intervals have been removed, and then channel compensation is performed, after which inverse- Fourier transformation is performed together for all of the K number of channel-compensated multi-carrier transmission symbols, and Fourier-transformation processing is performed on the inverse-Fourier-transformation results for each multi-carrier transmission symbol.
The FFT dimension of the receiving unit depends on how many symbols there are in each period for which the guard intervals are inserted. For example, by taking N to be the dimension for IFFT in the transmission unit, or in other words, by taking N to be the dimension of the frequency-multiplexing unit of the transmission unit, and supposing that guard intervals are inserted for every K number of 0FDM symbols, then the dimension for FFT in the receiving unit is equal to K · N points. If the guard intervals (CP or ZP) are estimated accurately, the output of K · N-point FFT is given by the following equation. ${\overline{y}}_{i}^{KN} = {\overline{\overline{H}}}_{i}^{KN} ⋅ {\overline{u}}_{i}^{KN} + {\overline{n}}_{i}^{KN}$
Where, ${\overline{y}}_{i , m}^{KN} = {\left[{y}_{i , 0}^{KN},{y}_{i , 1}^{KN},…{y}_{i , KN - 1}^{KN}\right]}^{T}$
is the received signal in the frequency domain after guard intervals have been removed; ${\overline{\overline{H}}}_{i}^{KN} = {\left[{H}_{i , 0}^{KN},{H}_{i , 1}^{KN},…{H}_{i , KN - 1}^{KN}\right]}^{T}$
is the channel response in the K · N-point frequency domain; ${\overline{u}}_{i}^{KN} = {\left[{u}_{i , 0}^{KN},{u}_{i , 1}^{KN},…{u}_{i , KN - 1}^{KN}\right]}^{T}$
is the transmission signal in the K · N-point frequency domain; and ${\overline{n}}_{i}^{KN}$
is the additive white Gaussian noise (AWGN).

The next step is to equalize the received signal (channel estimation/compensation) in order to reduce the effect of channel distortion.
Estimated channel values in the K · N-point frequency domain are given by the following equation. ${{H}^{˜}}_{i}^{KN} = {\left[{{H}^{˜}}_{i , 0}^{KN},{{H}^{˜}}_{i , 1}^{KN},…{{H}^{˜}}_{i , KN - 1}^{KN}\right]}^{T}$
Two methods for accurately estimating channel fluctuation will be described later.

The output from the channel equalizer can be expressed by the following equation. ${\overline{z}}_{i}^{KN} = {\left({{H}^{˜}}_{i}^{KN}\right)}^{- 1} ⋅ {\overline{y}}_{i}^{KN}$
When Equation (6) above is substituted in, the equation becomes as shown below. ${\overline{z}}_{i}^{KN} = {\left({{H}^{˜}}_{i}^{KN}\right)}^{- 1} ⋅ {\overline{\overline{H}}}_{i}^{KN} ⋅ {\overline{u}}_{i}^{KN} + {\left({{H}^{˜}}_{i}^{KN}\right)}^{- 1} ⋅ {\overline{n}}_{i}^{KN}$
In the case where perfect estimation is possible, the equation becomes as follows. ${\overline{z}}_{i}^{KN} = ⋅ {\overline{u}}_{i}^{KN} + {\overline{ε}}_{i}^{KN}$
Here, ${\overline{ε}}_{i}^{KN}$ is the noise in the equalizer output.

In order to demodulate the signal and accurately decode the received data, the processed data must be changed from the K · N-point frequency domain to the N-point frequency domain. In order to perform the operation of this step, K · N-point IFFT is performed once, and N-point FFT is performed K times in succession as shown in FIG. 2.
From the K · N-point IFFT calculation by the inverse-Fourier-transformation unit 67, the K · N-point time-domain-signal components are determined by the following equation. $\begin{matrix}{v}_{i , k}^{KN} = \frac{1}{\sqrt{K ⋅ N}} ⋅ {\sum }_{m = 0}^{KN - 1} {z}_{i , m}^{KN} ⋅ exp \left\{j⁢\frac{2 ⁢ πnk}{K ⋅ N}\right\} & 0 \leq k < K ⋅ N\end{matrix}$
The K · N-point time-domain-signal components are divided into divisions of N number of components each, and when N-point FFT processing is performed respectively for each division by the Fourier-transformation units 68₁ to 68_{K}, K · N number of sub-carrier-signal components, or in other words, K · N number of transmission symbols are determined by the following equation. $\begin{matrix}{x}_{a ⋅ K + b , m}^{N} = \frac{1}{\sqrt{N}} ⋅ {\sum }_{k = 0}^{N - 1} {v}_{a , b ⋅ N + m}^{KN} ⋅ exp \left\{j⁢\frac{2 ⁢ πmk}{N}\right\} & 0 \leq m < N\end{matrix}$
Here, a and b are integers that are defined such that ${ \begin{matrix}0 \leq b < K \\ 0 \leq a < A\end{matrix}$
and AK = I. I is the number of 0FDM symbols per frame. Finally, the N-point FFT results are demodulated and decoded.

### (d) Variation

Using batch operation, it becomes possible to process all of the operations for K · N-point IFFT and N-point FFT described above (operations of Equations (10) and (11)) together. After performing compensation for channel distortion, it becomes necessary to reduce the data dimension in the frequency domain. In order to accomplish this, the K · N-point sub-carrier signals are converted to an N-point signal stream by matrix conversion.
An N row by K · N column conversion matrix is given by $\begin{matrix}{\overline{W}}_{N * KN} = ⌊ {w}_{p , k} ⌋ & 0 \leq p < N , & 0 \leq k < K ⋅ N\end{matrix}$
and using this conversion matrix, Equation (11) can be expressed by the equation below. ${\overline{{x}^{˜}}}_{a ⋅ K + b}^{N} = {\overline{\overline{W}}}_{N * KN} ⋅ {\overline{z}}_{a}^{KN}$
Here, the p row and k column elements ${w}_{p , k}$
are given by the following equation ${w}_{p , k} = β {\sum }_{m = 0}^{N - 1} {e}^{- j ⁢ \frac{2 ⁢ π}{N} ⁢ pm} ⋅ {e}^{j ⁢ \frac{2 ⁢ π}{N} ⁢ \left(m+N\right) ⁢ k}$
where β is a normalization factor. Through simplification ${w}_{m , p}$
is expressed by the following equation. ${w}_{m , p} = { \begin{matrix}\begin{matrix}β ⋅ {e}^{j ⁢ \frac{2 ⁢ π}{K} ⋅ p ⋅ b} & if \frac{p}{K} - m = 0\end{matrix} \\ \begin{matrix}β ⋅ {e}^{j ⁢ \frac{2 ⁢ π}{K} ⋅ p ⋅ b} ⋅ \frac{1 - {e}^{j ⋅ 2 ⁢ π ⋅ \left(\frac{p}{K}-m\right)}}{1 - ⋅ {e}^{j ⁢ \frac{2 ⁢ π}{N} ⋅ \left(\frac{p}{K}-m\right)}} & if \frac{p}{K} - m \neq 0\end{matrix}\end{matrix}$
Therefore, it is possible to replace the K · N-point inverse-Fourier-transformation unit 67 and K number of N-point Fourier transformation units 68₁ to 68_{K} shown in FIG. 2 with a processing unit that performs the operation of Equation (12).

### (e) First Channel Estimation

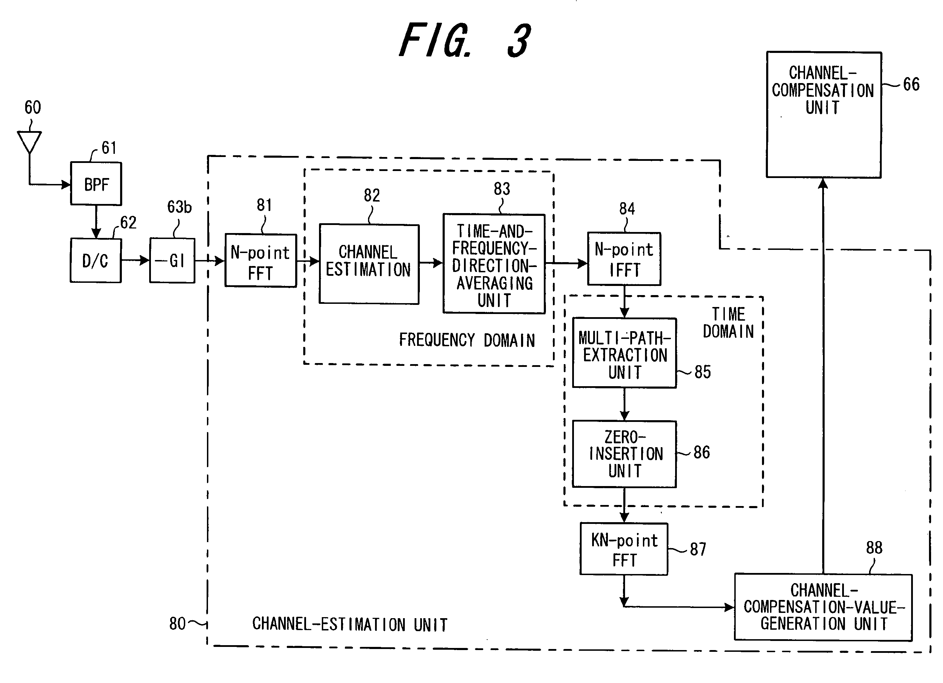

FIG. 3 is a block diagram showing the construction of the channel-estimation unit, where the same reference numbers are assigned for parts that are identical with those shown in FIG. 2.
In order to estimate the channel distortion in the frequency domain, pilot symbols are time multiplexed onto the data in the transmission frame. On the receiving side, N-point FFT is employed in order to convert to a signal in the frequency domain. Using well known processing (Np number of pilot symbols), channel distortion is estimated according to the following equation. $\begin{matrix}{{H}^{˜}}_{n , m}^{\left(i\right)} = {Y}_{n , m}^{\left(i\right)} / {\hat{S}}_{n , m}^{\left(i\right)} & \begin{matrix}0 \leq m < N , & 0 \leq n < {N}_{p}\end{matrix}\end{matrix}$
Here, ${{H}^{˜}}_{n , m}^{\left(i\right)} , {Y}_{n , m}^{\left(i\right)} and {\hat{S}}_{n , m}^{\left(i\right)}$
are the estimated channel response, the received signals, and pi lot symbols, respectively for the mth sub carrier of the ith user in the nth pi lot symbol.

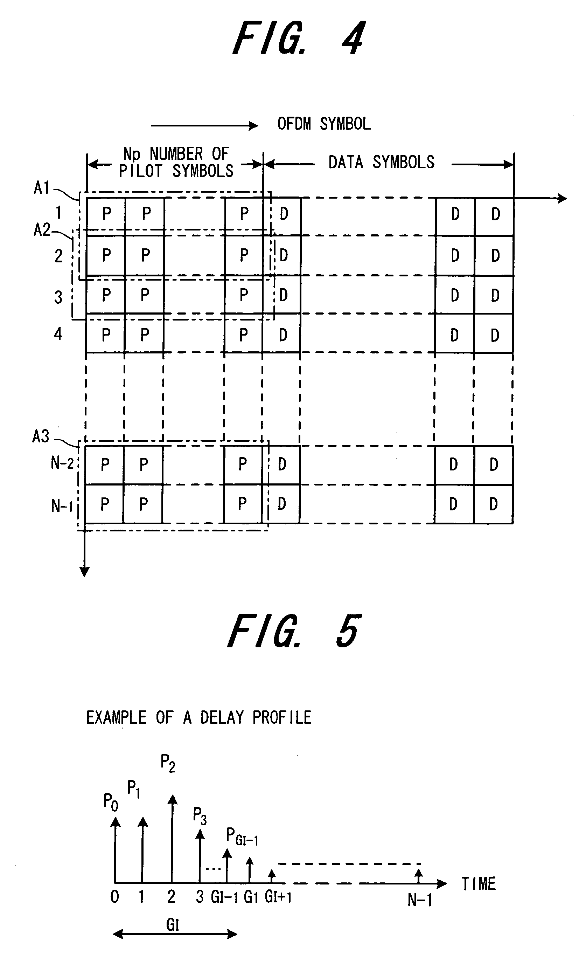

In a channel-estimation unit 80, a Fourier-transformation unit 81 uses the 0FDM symbol from which a guard interval has been removed to perform N-point FFT and generate N number of sub-carrier-signal, components, and a channel-estimation unit 82 performs the calculation of Equation (15) to estimate channels for each sub carrier. An averaging unit 83 averages the estimated channel values by averaging in both time domain and frequency domain using the equations below, and outputs the result. ${\hat{H}}_{m}^{\left(i\right)} = { \begin{matrix}\frac{1}{2 ⁢ {N}_{p}} ⋅ {\sum }_{j = 0}^{1} {\sum }_{n = 0}^{{N}_{p} - 1} {{H}^{˜}}_{n , j}^{\left(i\right)} & m = 0 \\ \frac{1}{3 ⁢ {N}_{p}} ⋅ {\sum }_{j = 0}^{1} {\sum }_{n = 0}^{{N}_{p} - 1} {{H}^{˜}}_{n , m + j}^{\left(i\right)} & 1 \leq m < N - 1 \\ \frac{1}{2 ⁢ {N}_{p}} ⋅ {\sum }_{j = 0}^{1} {\sum }_{n = 0}^{{N}_{p} - 1} {{H}^{˜}}_{n , N - 1 + j}^{\left(i\right)} & m = N - 1\end{matrix}$
The first summation Σ on the right side of Equation (16) adds the estimated channel values of the sub carriers, and the second summation Σ adds Np number of estimated channel values in the time domain. In other words, when m = 0 in the first equation on the right, the Np number of estimated channel values for both the first and second sub carriers are added and averaged as shown by the dashed line A1 in FIG. 4. Also, as shown by A2 in FIG. 4, when 1 ≦ m < N-1 in the second equation, Np number of estimated channel values for each of three adjacent sub carriers are added and averaged, and as shown by A3 in FIG. 4, when m = N - 1 in the third equation, Np number of estimated channel values for both the last two sub carriers are added and averaged.

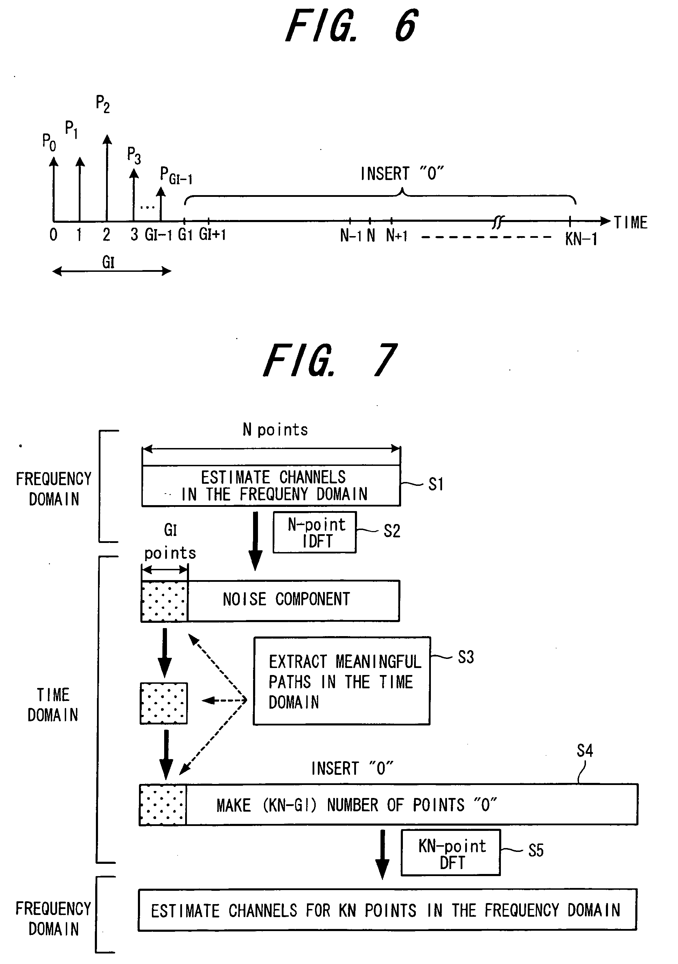

Next, an inverse-Fourier-transformation unit 84 performs N-point IFFT processing on the N number of estimated channel values in the frequency range and generates a delay profile as shown in FIG. 5. The graduations on the time axis of FIG. 5 are for the delay time from the direct wave, where the level P₀ at time 0 is the received level of the direct wave, the level at time 1 is the received level of the path having a delay of one symbol, the level at time 2 is the received level of the path having a delay of two symbols, and the level at time (N-1) is received level having a delay of (N-1) symbols. In other words, the output from the inverse-Fourier-transformation unit 84 is the received level of each of the multi paths.
Delay paths within the guard interval Gl period do not affect inter-symbol interference ISI, however, inter-symbol interference ISI occurs for delay paths that exceed Gl. Therefore, when performing channel estimation, a multi-path-extraction unit 85 extracts the multi paths for which delay time exceeds GI, and as shown in FIG. 6, a zero-insertion unit 85 makes the received levels of (K · N-GI) number of multi paths for which the delay time exceeds Gl '0'.
A Fourier-transformation unit 87 performs K · N-point FFT processing on K · N number of delay profiles for which the received level of (K · N-GI) number of multi paths have been made 0, and estimates channels for K · N number of sub carriers. A channel-compensation-value-generation unit 88 uses the estimated channel values to generate channel-compensation values based upon a method such as the ORC method, EGC method, MRC method, MMSE method or ZF method, and the channel-compensation unit 66 multiplies the K · N number of FFT processing results that are output from the Fourier-transformation unit 65 (FIG. 2) by the channel-compensation values to perform channel compensation.

### - ZF Method

In the ZF method, channel-compensation coefficients gₖ for each sub carrier are given by the inverse of the estimated channel responses Hₖ according to the equation below. ${g}_{k} + \frac{1}{{H}_{k}}$
When the channel-compensation unit 66 performs channel correction by multiplying the received signal (K · N-point FFT output) by the channel-compensation coefficients gₖ, the received signal becomes ${x}_{k} + \frac{{n}_{k}}{{H}_{k}}$
and channel compensation is performed.

### - Minimum Mean Square Error Method

In the minimum mean square error (MMSE) method, by definition the noise energy is given by $E ⌊ {n}_{k} ⁢ {n}_{k}^{*} ⌋ = {σ}_{n}^{2}$
the energy of the transmission signal becomes $E ⌊ {x}_{k} ⁢ {x}_{k}^{*} ⌋ = {σ}_{n}^{2} = P$
and SNR of each component becomes as below. $SNR = \frac{{σ}_{x}^{2}}{{σ}_{n}^{2}}$
The channel-compensation coefficients gₖ in the minimum mean square error method must be selected so that cost function of the following equation is minimized. $C = E ⁢ \left({\left|{x}_{k}-{\hat{x}}_{k}\right|}^{2}\right)$
Here, ${\hat{x}}_{k} = {g}_{k} ⋅ {y}_{k}$
where ${\hat{x}}_{k}$
is the output of the MMSE equalizer (channel-compensation unit), and is the channel-correction result. Through simplification the following equation is obtained. ${\hat{x}}_{k} = {g}_{k} ⋅ {y}_{k} = \frac{{H}_{k}^{*}}{α + {\left|{H}_{k}\right|}^{2}} ⋅ {y}_{k}$
Channel correction by the least squares method is performed according to the equation above. Here, α is given by the following equation. $α = \frac{{σ}_{n}^{2}}{{σ}_{x}^{2}} = \frac{1}{SNR}$

FIG. 7 is a flowchart of the channel-estimation process shown in FIG. 3.
In order to accurately estimate the channel response, pilot symbols are included in the transmission frame. For example, as shown in FIG. 17, a frame is set so that the first symbols at the start of the frame are pilots P, and the remaining symbols are data D. On the receiving side, the following process is performed in order to estimate the channel response in the frequency domain. First, N-point FFT is employed for converting the signal in the time domain to a signal in the frequency domain. Using a well-known sequence, channel responses are estimated for correcting the channel responses for each of the N number of sub carriers (step S1).

Next, a step is added in order to average the estimated values for channel distortion in both the time domain and frequency domain. Up to this step channel fluctuation is estimated only in the N-point frequency domain.
In the case where coherent detection is possible or where coherent detection is mostly possible, the period of guard interval is estimated well and it is possible to avoid inter-symbol interference and inter-channel interference. Therefore, channel characteristics (delay profile) are found by performing N-point IFFT processing (step S2). All meaningful paths can be extracted from the signal within the time interval [0, Gl · Td]. Here, Gl is the number of discrete data that constitute the guard interval, and Td is the period of the transmission data. The period of one 0FDM symbol is equal to (Gl + N) · Td. Only a noise component is included in the period [Gl · Td, (Gl+N) · Td]. The following processing is performed in order to reduce the noise component that adversely affects channel estimation and to obtain estimated channel values in the K · N-point frequency domain.

First, the meaningful paths are extracted (step S3). In order to perform this step, Gl number of the first data are saved in memory. Next, zeros are added to and set for the rest of the frame (K · N-Gl) (step S4). The output from K · N-point FFT becomes the estimated channel values that are used for realizing the already proposed equalizer (step S5).
In the construction of the first channel-estimation unit, FFT that is performed by the Fourier-transformation units 81 and 87, can be replaced with DFT, and the IFFT that is performed by the inverse-Fourier-transformation unit 84 can be replaced with IDFT.

### (f) Second Channel Estimation

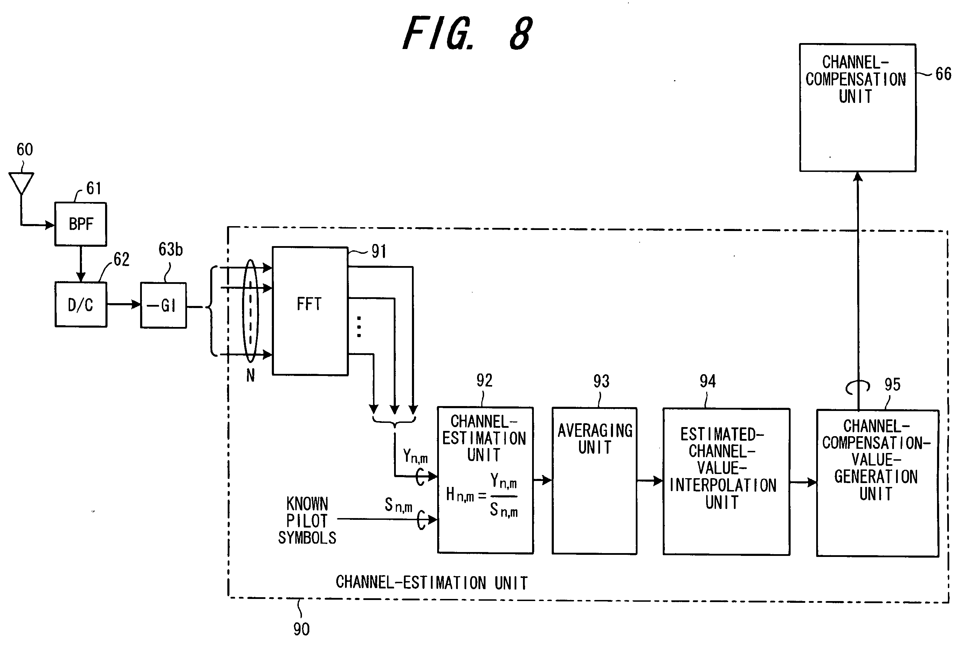

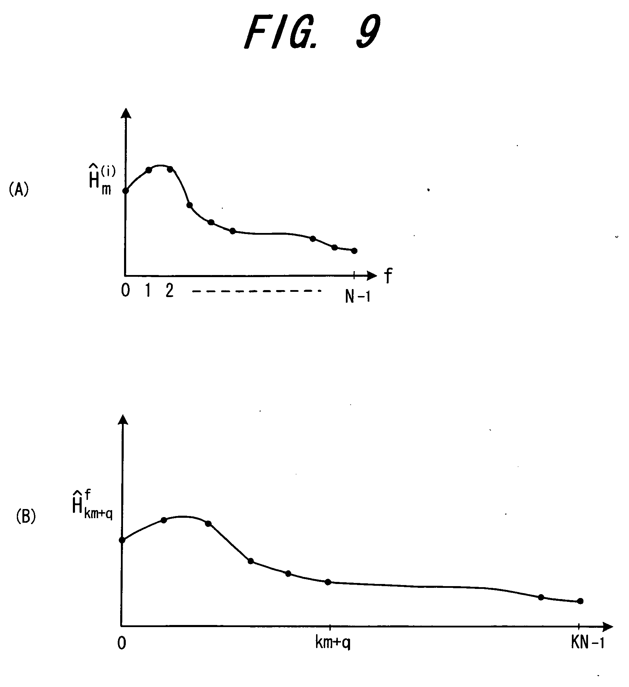

FIG. 8 is a block diagram showing the construction of a different channel-estimation unit, where the same reference numbers are used for parts that are identical to those shown in FIG. 2.
In the channel-estimation unit 90, a Fourier-transformation unit 91 uses an 0FDM symbol from which a guard interval has been removed to perform N-point FFT and generate N number of sub-carrier-signal components, and a channel-estimation unit 92 performs the operation of Equation (15) to estimate channels for each sub carrier. An averaging unit 93 performs the operation of Equation (16) to average the estimated channel values by averaging in both the time domain and frequency domain and output the results. From the above, estimated channel values are obtained for N number of sub carriers as shown in (A) of FIG. 9. Next, an estimated-channel-value-interpolation unit 94 uses the equation below to interpolate (K-1) number of estimated channel values between the adjacent estimated channel values, and calculates estimated channel values for K · N number of sub carriers according to K number of 0FDM symbols. $\begin{matrix}{\hat{H}}_{K ⋅ m + q}^{f} = \frac{1}{K} \left\{\left(K-q\right)⋅{\hat{H}}_{m}+q⋅{\hat{H}}_{m + 1}\right\} & \begin{matrix}∀ 0 \leq m < N , & ∀ 0 \leq q < K\end{matrix}\end{matrix}$
Here, ${\hat{H}}_{Km + q}^{f}$ is the estimated channel value for the mth sub carrier in the K · N-point frequency domain as shown in (B) of FIG. 9.

A channel-compensation-value-generation unit 95 uses the estimated channel values to generate channel-compensation values based upon a method such as the ORC method, EGC method, MRC method, MMSE method or ZF method, and a channel-compensation unit multiplies the K · N number of FFT process i ng results that are output from the Fourier-transformation unit 65 by the channel-compensation values.
In the construction of the second channel-estimation unit, FFT was performed by the Fourier-transformation unit 91, however it is possible to replace it with DFT.

### (B) Embodiment 2

In the first embodiment, the invention was applied to the 0FDM communication method in which data were transmitted or received after inserting a guard interval for very K number of 0FDM symbols, however, the present invention may also be applied to the MC-CDMA communication method.

### (a) MC-CDMA Transmission Apparatus

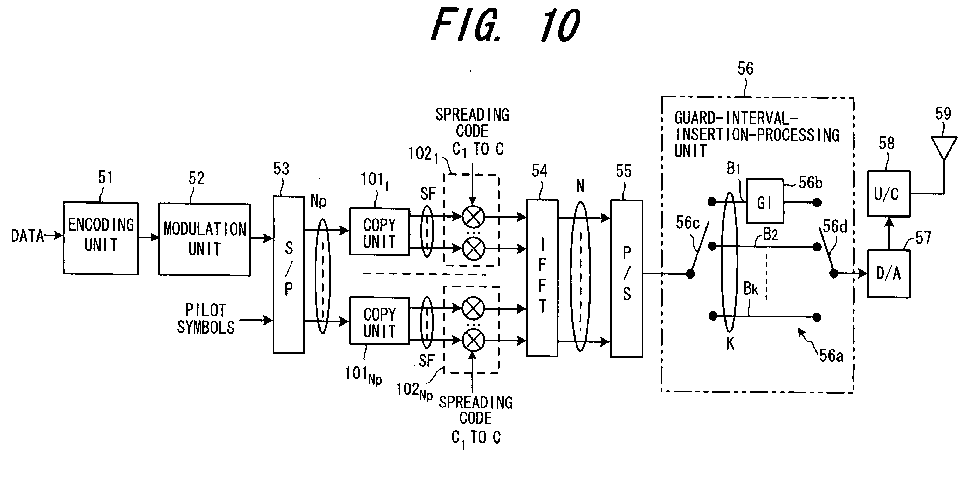

FIG. 10 is a block diagram showing the construction of an MC-CDMA transmission apparatus, where the same reference numbers are used for parts that are the same as those of the 0FDM transmission apparatus shown in FIG. 1. This apparatus differs in that (1) there are Np number of copy units 101₁ to 101_{Np} that make SF number of copies of each of the Np number of data that are output from an S/P conversion unit 53 and outputs the result, and (2) there are Np number of spreading units 102₁ to 102_{Np} that multiply the SF number of data that are output from each copy unit by spreading codes C₁ to C_{SF} (spreading codes having a spreading factor SF) that are unique to the user.
In other words, an encoding unit 51 encodes high-speed binary data using convolution code or turbo code, for example, and a modulation unit 52 performs interleaving after which it modulates the encoded data using a modulation method such as BPSK, QPSK or 16-QAM. Next, an S/P conversion unit 53 converts the modulated data symbols and pi lot symbols to Np number of parallel low-speed data sequences, and outputs the result.

The Np number of copy units 101₁ to 101_{Np} make SF number of copies of each of the Np number of symbols that are output in parallel from the S/P conversion unit 53, and output the results, then the Np number of spreading units 101₁ to 102_{Np} multiply the SF number of symbols that are output from each of the copy units by spreading codes C, to C_{SF} (spreading codes having a spreading factor SF) that are unique to the user, after which an inverse-Fourier-transformation unit 54 performs IFFT processing on N (= Np x SF) number of sub-carrier components, and a P/S conversion unit 55 converts the N number of time-domain-signal components that were obtained from IFFT processing from parallel to serial and outputs the result as an 0FDM symbol.
In a guard-interval-insertion-processing unit 56, a switch 56c inputs K number of 0FDM symbols that are output from the P/S conversion unit 55 in order to buffers B₁ to B_{K}, then a guard-interval-insertion unit 56b inserts a cyclic prefix CP as a guard interval Gl by copying the last G number of symbols of the Kth 0FDM symbol in front of the first 0FDM symbol as shown in (A) of FIG. 23. Next, a switch 56d reads the 0FDM symbols with guard intervals attached in order from the buffers B₁ to B_{K} and inputs them to a digital-to-analog (DA) conversion unit 57.
The DA conversion unit 57 converts the 0FDM symbols that were input from the guard-interval-insertion-processing unit 56 to an analog signal, and a radio unit 58 performs up-conversion of the frequency from a baseband signal to a radio signal, after which it amplifies the signal and transmits it from an antenna 59.
In this embodiment, in the MC-CDMA transmission apparatus the inverse-Fourier-transformation unit 54 performed IFFT processing, however, IDFT processing could also be performed.

### (b) MC-CDMA Receiving Apparatus

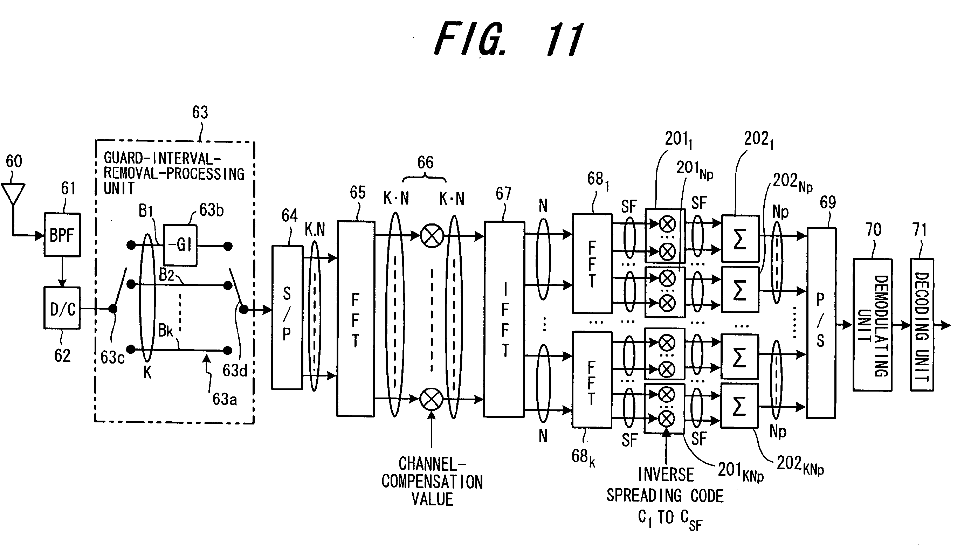

FIG. 11 is a block diagram showing the construction of an MC-CDMA receiving apparatus, where the same reference numbers are used for parts that are the same as those of the 0FDM receiving apparatus shown in FIG. 2. This apparatus differs in that (1) there are K x Np number of inverse-spreading uni ts 201₁ to 201_{K · Np} that separate the N (= Np x SF) number of sub-carrier components that are output from N-point Fourier-transformation units 68₁ to 68_{K} into divisions of SF number of components each, and multiplies each division by spreading codes C₁ to C_{SF} (spreading codes having a spreading factor SF) that are unique to the user, and (2) there are K x Np number of adder units 202, to 202_{K · Np} that add the SF number of inverse-spread data that are output from each of the inverse-spreading units 201₁ to 201_{K · Np}.
In other words, a bandpass filter (BPF) 61 filters the signal received from an antenna 60 and removes the unneeded frequency component, a down-converter (D/C) 62 converts the frequency of the radio signal to a baseband signal, an analog-to-digital conversion unit (not shown in the figure) converts that baseband signal from an analog signal to a digital signal, and a guard-interval-removal unit 63 removes the guard intervals. An S/P conversion unit 64 converts the time-domain-signal from which the guard intervals have been removed to K · N (= K x Nc x SF) number of parallel data, and inputs the result to a K · N-point Fourier-transformation unit 65. The Fourier-transformation unit 65 performs FFT processing on K · N number of time-domain-signal components and outputs K · N number of sub-carrier components. A channel-estimation unit (see FIG. 3 or FIG. 8) uses pilot symbols to estimate channels for each sub carrier, then generates channel-compensation values using a method such as the MMSE method or ZF method, after which a channel-compensation unit 66 multiplies the K · N number of FFT processing results by the channel-compensation values to perform channel compensation.

Next, an inverse-Fourier-transformation unit 67 performs K · N-point IFFT processing at the same time for all of the K · N number of channel-compensated sub-carrier components (K number of 0FDM symbols), and outputs K · N-point time-domain-signal components in parallel. K number of N-point Fourier-transformation units 68₁ to 68_{K} divide the K · N number of time-domain-signal components that were output in parallel from the inverse-Fourier-transformation unit 67 into divisions of N number of components each and perform N-point FFT processing on each division. As a result, each of the Fourier-transformation units 68, to 68_{K} generates N number of sub-carrier components. Np number of inverse-spreading units 201₁ to 201_{Np}, 201_{Np+1} to 201_{2 · Np}, ... , 201_{(K-1) · Np+1} to 201_{K · Np} are connected to each of the Fourier-transformation units 68₁ to 68_{K}. The Np number of inverse-spreading units 201₁ to 201_{Np} divide the N (= Np x SF) number of sub-carrier components that are output from the Fourier-transformation unit 68₁ into divisions of SF number of components each, and perform inverse spreading by multiplying each division by spreading codes C, to C_{SF} (spreading code having a spreading factor SF) that are unique to the user, and the adder units 202₁ to 202_{Np} respectively add the SF number of inverse-spread data that are output from each of the corresponding inverse-spreading units 201₁ to 201_{Np} and output Np number of data. The other inverse-spreading units 201_{Np+1} to 201_{2 · Np}, ..., 201_{(K-1) · Np+1} to 201_{K} . _{Np} and adder units 202_{Np+1} to 202_{2 · Np}, ..., 202_{(K-1) · Np+1} to 202_{K · Np} similarly perform the same operation so that Np number of data are output from each.
A P/S conversion unit 69 serially outputs in order K groups of Np number of symbols that were input from each adder unit, then a demodulation unit 70 demodulates the input signal using a demodulation method such as BPSK, QPSK and 16QAM, and a decoding unit 71 performs deinterleaving after which it decodes and outputs the input data.
In the construction of this MC-CDMA receiving apparatus, the FFT processing performed by the Fourier-transformation unit 65 and N-point Fourier-transformation units 68₁ to 68_{K} can be replaced by DFT processing, and the IFFT processing performed by the inverse-Fourier-transformation unit 67 can be replaced by IDFT processing.

### (C) Another Embodiment of an MC-CDMA Receiving Apparatus

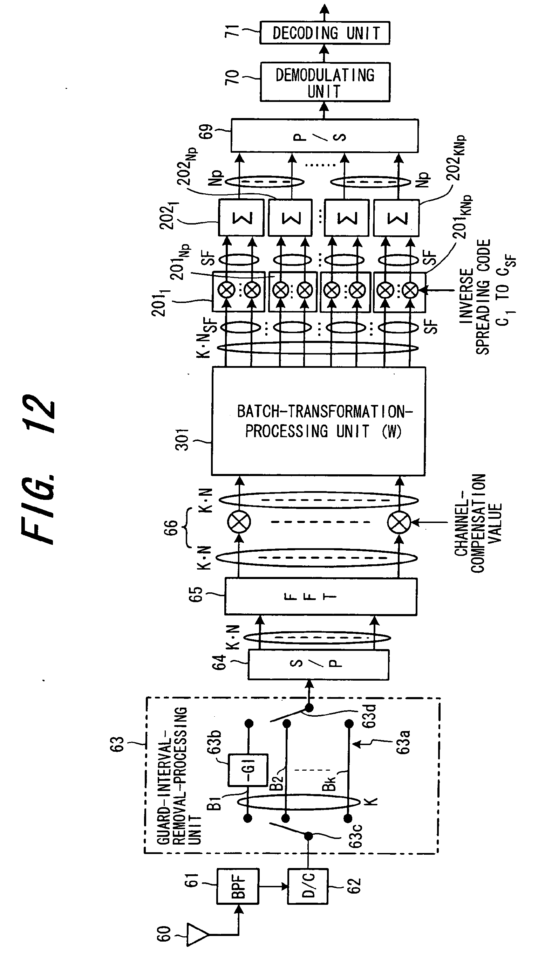

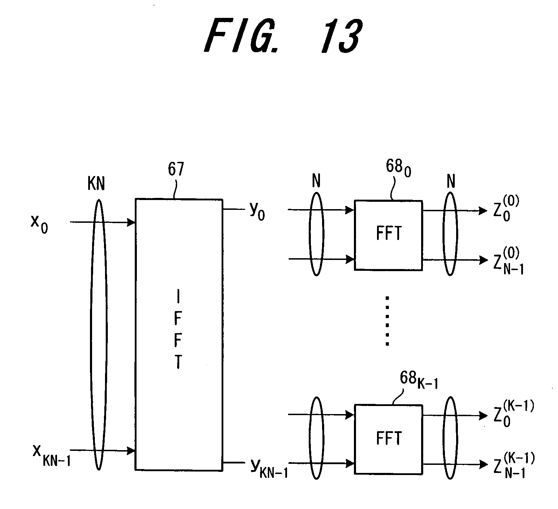

FIG. 12 is a block diagram showing a second embodiment of the construction of an MC-CDMA receiving apparatus, where the same reference numbers are used for parts that are the same as those of the MC-CDMA receiving apparatus shown in FIG. 11. This apparatus differs in that the K · N-point inverse-Fourier-transformation unit 67 and K number of N-point Fourier-transformation units 68₁ to 68_{K} are removed, and there is a batch-transformation-processing unit 301 that performs the K · N-point IFFT processing and N-point FFT processing together.
The batch transformation performed by the batch-transformation-processing unit 301 was explained above using Equations (12) to (14), however, it will be explained in more detail here. When expressing the input/output signals of the inverse-Fourier-transformation unit 67 that performs K · N-point IFFT processing and K number of Fourier-transformation units 68₀ to 68_{K-1} that perform N-point FFT processing as shown in FIG. 13, the IFFT processing results and FFT processing results can be respectively expressed by following equations. $\begin{matrix}{y}_{k} = \frac{1}{\sqrt{KN}} ⋅ {\sum }_{n = 0}^{KN - 1} {x}_{n} ⋅ {e}^{j ⁢ \frac{2 ⁢ π}{KN} ⁢ n ⋅ k} & \begin{matrix}0 \leq k < KN - 1 & 0 \leq n < KN - 1\end{matrix}\end{matrix}$ $\begin{matrix}{z}_{u}^{\left(a\right)} = \frac{1}{\sqrt{N}} ⋅ {\sum }_{v = 0}^{N - 1} {y}_{aN + v} ⋅ {e}^{- j ⁢ \frac{2 ⁢ π}{N} ⁢ \left(aN+v\right) ⁢ u} & \begin{matrix}0 \leq u < N , & 0 \leq a < K , & 0 \leq v < N\end{matrix}\end{matrix}$
or ${z}_{u}^{\left(a\right)} = \frac{1}{\sqrt{K} ⁢ N} ⋅ {\sum }_{n = 0}^{KN - 1} {\sum }_{v = 0}^{N - 1} {x}_{n} ⋅ {e}^{j ⁢ \frac{2 ⁢ π}{N} ⁢ \left(aN+v\right) ⁢ n} ⋅ {e}^{j ⁢ \frac{2 ⁢ π}{N} ⁢ \left(aN+v\right) ⁢ u}$
In transforming the equations, they become as follows. ${z}_{u}^{\left(a\right)} = \frac{1}{\sqrt{K} ⁢ N} ⋅ {\sum }_{n = 0}^{KN - 1} {\sum }_{v = 0}^{N - 1} {x}_{n} ⋅ {e}^{j ⁢ \frac{2 ⁢ π}{N} ⁢ \left(aN+v\right) ⋅ \left[\frac{n}{K}-u\right]}$
or ${z}_{u}^{\left(a\right)} = \frac{1}{\sqrt{K} ⁢ N} ⋅ {\sum }_{n = 0}^{KN - 1} {\sum }_{v = 0}^{N - 1} {x}_{n} ⋅ {e}^{j ⁢ \frac{2 ⁢ π}{N} \left(aN\right) ⋅ \left[\frac{n}{K}-u\right]} ⋅ {e}^{j ⁢ \frac{2 ⁢ π}{N} ⁢ v ⋅ \left[\frac{n}{K}-u\right]}$
When ${e}^{j ⁢ \frac{2 ⁢ π}{N} ⋅ a ⋅ N ⋅ \left[\frac{n}{K}-u\right]} = {e}^{j ⁢ \frac{2 ⁢ π}{K} ⋅ a ⋅ n}$
is satisfied, the elements *w_{u,n}* of a N-row by K · N-column (N x K · N) matrix W that performs batch transformation are found from the following equations. ${w}_{u , n} = \frac{1}{\sqrt{K} ⁢ N} ⁢ {e}^{j ⁢ \frac{2 ⁢ π}{K} ⋅ a ⋅ n} ⋅ {\sum }_{v = 0}^{N - 1} {e}^{j ⁢ \frac{2 ⁢ π}{N} ⁢ \left[\frac{n}{K}-u\right]}$
or ${w}_{u , n} = \frac{1}{\sqrt{K} ⁢ N} ⁢ {e}^{j ⁢ \frac{2 ⁢ π}{K} ⋅ a ⋅ n} ⋅ \frac{1 - {e}^{j ⁢ 2 ⁢ π ⁢ \left[\frac{n}{K}-u\right]}}{1 - {e}^{j ⁢ \frac{2 ⁢ π}{N} ⁢ \left[\frac{n}{K}-u\right]}}$
In other words, when the batch-transformation-processing unit 301 multiplies the N-row by K · N-column matrix W by a K · N x 1 vector *x̅ₙ*, it is possible to generate results that are the same as the results obtained by performing the IFFT operation and K number of FFT operations shown in FIG. 11. After that, it is possible to demodulate and decode the data by the same processing as that shown in FIG. 11.
In this embodiment, it is possible to replace FFT processing with DFT processing, and to replace IFFT processing with IDFT processing.

### (d) Another Embodiment of an MC-CDMA Receiving Apparatus

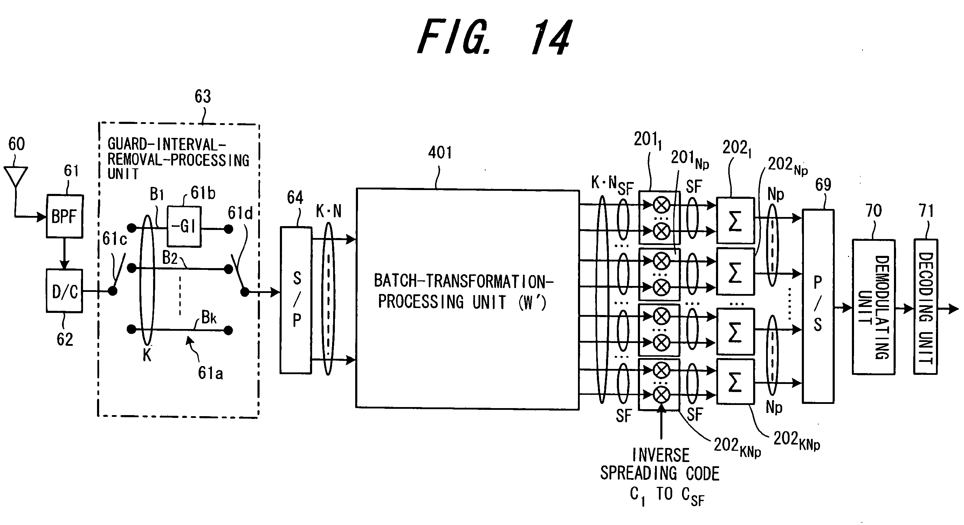

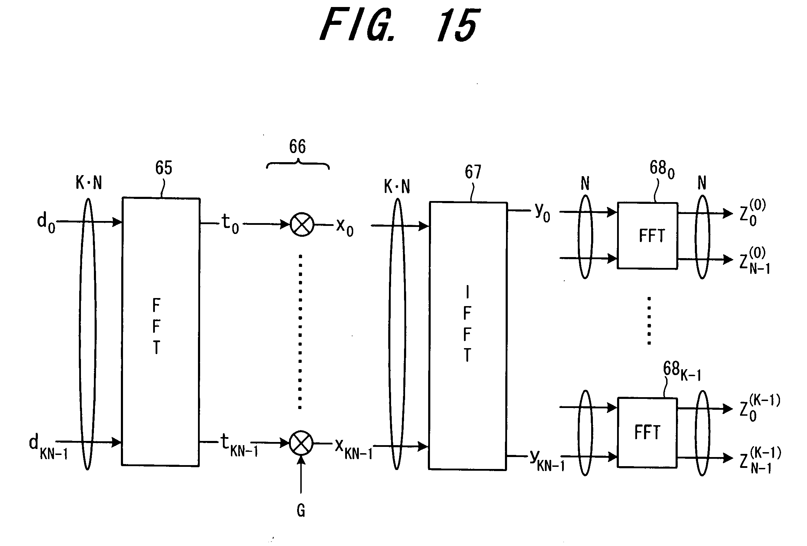

FIG. 14 is a block diagram showing the construction of a third embodiment of an MC-CDMA receiving apparatus, where the same reference numbers are used for parts that are the same as those of the MC-CDMA receiving apparatus shown in FIG. 11. This apparatus differs in that the K · N -point Fourier-transformation unit 65, channel-compensation unit 66, K · N -point inverse-Fourier-transformation unit 67 and K number of N-point Fourier-transformation uni ts 68, to 68_{K} shown in FIG. 11 have been el iminated, and there is a batch-transformation-processing unit 401 that performs the K · N-point FFT processing, channel-compensation processing, K · N-point IFFT processing and N-point FFT processing together.
When expressing the input/output signals for the K · N -point Fourier-transformation unit 65, channel-compensation unit 66, K · N-point inverse-Fourier-transformation unit 67 and K number of N-point Fourier-transformation units 68₀ to 68_{K-1} as shown in FIG. 15, the IFFT processing results and FFT processing results satisfy the following equation. ${x}_{n} = {g}_{n} ⋅ {t}_{n}$
Here, the element tₚ and yₖ are given by the following equations. ${t}_{p} = \frac{1}{\sqrt{KN}} ⋅ {\sum }_{k = 0}^{KN - 1} {d}_{k} ⋅ {e}^{- j ⁢ \frac{2 ⁢ π}{KN} ⋅ pk}$

$\begin{matrix}{y}_{k} = \frac{1}{\sqrt{KN}} ⋅ {\sum }_{n = 0}^{KN - 1} {x}_{n} ⋅ {e}^{j ⁢ \frac{2 ⁢ π}{KN} ⁢ n ⋅ k} & \begin{matrix}0 \leq k < KN - 1 & 0 \leq n < KN - 1\end{matrix}\end{matrix}$
and from FIG. 15, the following equations can be derived. $\begin{matrix}{z}_{u}^{\left(a\right)} = \frac{1}{\sqrt{N}} ⋅ {\sum }_{v = 0}^{N - 1} {\dot{y}}_{aN + v} ⋅ {e}^{- j ⁢ \frac{2 ⁢ π}{N} ⁢ \left(aN+v\right) ⁢ u} & \begin{matrix}0 \leq u < N , & 0 \leq a < K , & 0 \leq v < N\end{matrix}\end{matrix}$
or ${z}_{u}^{\left(a\right)} = \frac{1}{\sqrt{K} ⁢ N} ⋅ {\sum }_{n = 0}^{KN - 1} {\sum }_{v = 0}^{N - 1} {g}_{n} ⋅ {t}_{n} ⋅ {e}^{j ⁢ \frac{2 ⁢ π}{N} ⁢ \left(aN+v\right) ⁢ \left[\frac{n}{K}-u\right]}$
Transforming the equation results in the following equations ${z}_{u}^{\left(a\right)} = \frac{1}{{KN}^{3 / 2}} ⋅ {\sum }_{n = 0}^{KN - 1} {\sum }_{v = 0}^{N - 1} {\sum }_{n = 0}^{KN - 1} {d}_{k} ⋅ {g}_{n} ⋅ {e}^{j ⁢ \frac{2 ⁢ π}{K} ⋅ n ⁢ \left(a-\frac{k}{N}\right)} ⋅ {e}^{j ⁢ \frac{2 ⁢ π}{N} ⁢ v ⁢ \left[\frac{n}{K}-u\right]}$ ${z}_{u}^{\left(a\right)} = \frac{1}{{KN}^{3 / 2}} ⋅ {\sum }_{n = 0}^{KN - 1} {d}_{k} ⋅ {\sum }_{v = 0}^{N - 1} {\sum }_{n = 0}^{KN - 1} {g}_{n} ⋅ {e}^{j ⁢ \frac{2 ⁢ π}{K} ⋅ n ⁢ \left(a-\frac{k}{N}\right)} ⋅ {e}^{j ⁢ \frac{2 ⁢ π}{N} ⁢ v ⁢ \left[\frac{n}{K}-u\right]}$ ${w}_{u}^{\left(a\right)} = {\sum }_{k = 0}^{KN - 1} {d}_{k} ⋅ \frac{1}{{KN}^{3 / 2}} ⋅ {\sum }_{n = 0}^{KN - 1} {g}_{n} ⋅ {e}^{j ⁢ \frac{2 ⁢ π}{K} ⋅ n ⁢ \left[a-\frac{k}{N}\right]} ⋅ \frac{1 - {e}^{j ⁢ 2 ⁢ π ⁢ \left[\frac{n}{K}-u\right]}}{1 - {e}^{j ⁢ \frac{2 ⁢ π}{N} ⁢ \left[\frac{n}{K}-u\right]}}$
where the elements ${w}_{u , k}^{ʹ}$ of a N-row by K · N-column (N x K · N) matrix W' that performs batch transformation are given by the equation below. ${w}_{u , k}^{ʹ} = \frac{1}{{KN}^{3 / 2}} ⋅ {\sum }_{n = 0}^{KN - 1} {g}_{n} ⋅ {e}^{j ⁢ \frac{2 ⁢ π}{K} ⋅ n ⁢ \left[a-\frac{k}{N}\right]} ⋅ \frac{1 - {e}^{j ⁢ 2 ⁢ π ⁢ \left[\frac{n}{K}-u\right]}}{1 - {e}^{j ⁢ \frac{2 ⁢ π}{N} ⁢ \left[\frac{n}{K}-u\right]}}$
In other words, when the batch-transformation-processing unit 401 multiplies the N-row by K · N-column matrix W' by a K · N x 1 vector *d̅ₙ*, results that are the same as the results obtained when performing the K · N-point FFT operation, channel-compensation operation, K · N-point IFFT operation and K number of N-point FFT operations shown in FIG. 11 are output (FFT output for K number of groups having N number of components each).
In this embodiment, FFT processing can be replaced by DFT processing, and IFFT processing can be replaced by IDFT processing.

With the invention described above, it is possible to provide a multi-carrier receiving method and multi-carrier receiving apparatus, and a channel-estimation method and channel-estimation apparatus for a communication system in which transmission is performed after inserting a guard interval for every K number of multi-carrier transmission symbols (for example, K number of 0FDM symbols).
Also, with this invention, transmission and reception are performed after inserting a guard interval for every K number of multi-carrier transmission symbols, so it is possible to improve the efficiency of data transmission.
Moreover, with this invention, in a multi-carrier communication method in which transmission is performed after inserting a guard interval for every K number of multi-carrier transmission symbols, it is possible to accurately estimate channels and to effectively perform channel compensation for K · N number of sub carriers, and as a result accurately demodulate transmission data.
In the description above, the case in which the present invention was applied to a 0FDM or MC-CDMA was explained, however, this invention can also be applied to a general multi-carrier communication method.

## Claims

1. A multi-carrier receiving method in a multi-carrier communication system that receives and demodulates a signal to which a guard interval has been attached for every group of a plurality of multi-carrier transmission symbols, comprising steps of:
performing Fourier-transformation processing together for every group of a plurality of multi-carrier transmission symbols;
estimating channels for sub carriers that correspond to the plurality of multi-carrier transmission symbols, and performing channel compensation on said Fourier-transformation results based on the channel-estimation results; and
performing inverse-Fourier-transformation processing together for every group of a plurality of channel-compensated multi-carrier transmission symbols, then performing Fourier-transformation processing on the inverse-Fourier-transformation results for every multi-carrier transmission symbol and demodulating the received signal.

2. The multi-carrier receiving method of claim 1 wherein said guard interval has a cyclic prefix configuration.

3. The multi-carrier receiving method of claim 1 wherein said guard interval has a zero padding configuration.

4. The multi-carrier receiving method of claim 1 wherein said guard interval has a combined cyclic prefix and zero padding configuration.

5. The multi-carrier receiving method of claim 1 wherein said multi-carrier communication system is an 0FDM communication system.

6. The multi-carrier receiving method of claim 1 wherein said multi-carrier communication system is a multi-carrier CDMA communication system.

7. The multi-carrier receiving method of claim 1 wherein estimation of channels for sub carriers corresponding to said plurality of (=K number of) multi-carrier transmission symbols comprises:
a step of estimating channels for N number of sub carriers using a multi-carrier transmission symbol from which the guard interval has been removed; and
a step of interpolating (K-1) number of estimated channel values between the adjacent estimated values and obtaining estimated channel values for K · N number of sub carriers that correspond to said plurality of multi-carrier transmission symbols.

8. The multi-carrier receiving method of claim 1 wherein estimation of channels for sub carriers corresponding to said plural i ty of (= K number of) multi-carrier transmission symbols comprises:
a step of estimating channels for N number of sub carriers using a multi-carrier transmission symbol from which the guard interval has been removed;
a step of performing N-point inverse Fourier-transformation processing on the estimated channel values for N number of sub carriers and creating a delay profile that indicates the multi-path receiving levels;
a step of making a receiving level of a path that exceeds the guard interval period Gl of the delay profile zero; and
a step of performing K · N-point Fourier-transformation processing on said delay profile that has been made zero and estimating channels for K · N number of sub carriers that correspond to said plurality of multi-carrier transmission symbols.

9. The multi-carrier receiving method of claim 7 or claim 8 wherein said channel compensation uses said estimated channel values to generate channel-compensation values using a zero-forcing (ZF) method.

10. The multi-carrier receiving method of claim 7 or claim 8 wherein said channel compensation uses said estimated channel values to generate channel-compensation values using a minimum mean square error (MMSE) method.

11. A channel-estimation method in a multi-carrier receiving apparatus that receives and demodulates a signal to which a guard interval has been attached for every group of a plurality of (= K number of) multi-carrier transmission symbols comprising steps of:
removing guard intervals from the received signal;
estimating channels for N number of sub carriers using a multi-carrier transmission symbol from which the guard interval has been removed; and
interpolating (K-1) number of estimated channel values between the adjacent estimated channel values and obtaining estimated channel values for K · N number of sub carriers corresponding to said plurality of multi-carrier transmission symbols.

12. A channel-estimation method in a multi-carrier receiving apparatus that receives and demodulates a signal to which a guard interval has been attached for every group of a plurality of (= K number of) multi-carrier transmission symbols comprising steps of:
removing guard intervals from the received signal;
estimating channels for N number of sub carriers using a multi-carrier transmission symbol from which the guard interval has been removed;
performing N-point inverse-Fourier-transformation processing on the estimated channel values for N number of sub carriers and creating a delay profile that indicates the multi-path receiving levels;
making receiving levels that exceed the guard-interval period Gl of that delay profile zero; and
performing K · N-point Fourier-transformation processing on the delay profile that has been made zero to estimate channels for K · N number of sub carriers that correspond to said plurality of multi-carrier transmission symbols.

13. A multi-carrier receiving apparatus in a multi-carrier communication system that receives and demodulates a signal to which a guard interval has been attached for every group of a plurality of (= K number of) multi-carrier transmission symbols comprising:
a guard-interval-removal unit that removes guard intervals from a received signal;
a Fourier-transformation unit that performs Fourier-transformation processing together for every group of a plurality of multi-carrier transmission symbols from which the guard intervals has been removed;
a channel-estimation/compensation unit that estimates channels for sub carriers that correspond to the plurality of multi-carrier transmission symbols and performs channel compensation based on the channel-estimation results;
an inverse-Fourier-transformation unit that performs inverse-Fourier-transformation processing together on the plurality of channel-compensated multi-carrier transmission symbols;
a Fourier-transformation unit that performs Fourier-transformation processing on the inverse-Fourier-transformation results for each multi-carrier transmission symbol; and
a demodulation unit that demodulates the transmission data based on the Fourier-transformation results.

14. A multi-carrier receiving apparatus in a multi-carrier communication system that receives and demodulates a signal to which a guard interval has been attached for every group of a plurality of (= K number of) multi-carrier transmission symbols comprising:
a guard-interval-removal unit that removes guard intervals from a received signal;
a Fourier-transformation unit that performs Fourier-transformation processing together for every group of a plurality of multi-carrier transmission symbols from which the guard interval has been removed;
a channel-estimation/compensation unit that estimates channels for sub carriers that correspond to the plurality of multi-carrier transmission symbols and performs channel compensation based on the channel-estimation results;
a processing unit that performs inverse-Fourier-transformation processing together on the plurality of channel-compensated multi-carrier transmission symbols, as well as performs Fourier-transformation processing on the inverse-Fourier-transformation results for each multi-carrier transmission symbol; and
a demodulation unit that demodulates the transmission data based on the Fourier-transformation results.

15. A multi-carrier receiving apparatus in a multi-carrier communication system that receives and demodulates a signal to which a guard interval has been attached for every group of a plurality of multi-carrier transmission symbols comprising:
a guard-interval-removal unit that removes guard intervals from a received signal;
a processing unit that performs Fourier-transformation processing together for every group of a plurality of multi-carrier transmission symbols from which the guard interval has been removed, estimates channels for sub carriers that correspond to the plurality of multi-carrier transmission symbols and performs channel compensation based on the channel-estimation results, performs inverse-Fourier-transformation processing together on the plurality of channel-compensated multi-carrier transmission symbols, and performs Fourier-transformation processing on the inverse-Fourier-transformation results for each multi-carrier transmission symbol; and
a demodulation unit that demodulates the transmission data based on the Fourier-transformation results.

16. The multi-carrier receiving apparatus of claim 13 or claim 14 wherein
said channel-estimation/compensation unit comprises:
means for estimating channels for N number of sub carriers using a multi-carrier transmission symbol from which the guard interval has been removed; and
means for interpolating (K-1) number of estimated channel values between the adjacent estimated channel values and obtaining estimated channel values for K · N number of sub carriers that correspond to said plurality of multi-carrier transmission symbols.

17. The multi-carrier receiving apparatus of claim 13 or claim 14 wherein
said channel-estimation/compensation unit comprises:
means for estimating channels for N number of sub carriers using a multi-carrier transmission symbol from which the guard interval has been removed;
means for performing N-point inverse-Fourier-transformation processing on the estimated channel values for N number of sub carriers and creating a delay profile that indicates the multi-path receiving levels;
means for making the receiving level of paths that exceed the guard-interval period Gl of the delay profile zero; and
means for performing K · N-point Fourier-transformation processing on the delay profile that has been made zero to estimate channels for K · N number of sub carriers that correspond to said plurality of multi-carrier transmission symbols.

18. The multi-carrier receiving apparatus of any one of the claims 13 to 15 wherein said multi-carrier communication system is an 0FDM communication system.

19. The multi-carrier receiving apparatus of any one of the claims 13 to 15 wherein said multi-carrier communication system is a multi-carrier. CDMA communication system.

20. A channel-estimation apparatus in a multi-carrier receiving apparatus that receives and demodulates a signal to which a guard interval has been attached for every group of a plurality of (= K number of) multi-carrier transmission symbols comprising:
means for removing guard intervals from a received signal;
means for estimating channels for N number of sub carriers using a multi-carrier transmission symbol from which the guard interval has been removed; and
means for interpolating (K-1) number of estimated channel values between the adjacent estimated channel values and obtaining estimated channel values for K · N number of sub carriers that correspond to said plurality of multi-carrier transmission symbols.

21. A channel-estimation apparatus in a multi-carrier receiving apparatus that receives and demodulates a signal to which a guard interval has been attached for every group of a plurality of (= K number of) multi-carrier transmission symbols comprising:
means for removing guard intervals from a received signal;
means for estimating channels for N number of sub carriers using a multi-carrier transmission symbol from which the guard interval has been removed;
means for performing N-point inverse-Fourier-transformation processing on the estimated channel values for N number of sub carriers and creating a delay profile that indicates the multi-path receiving levels;
means for making the receiving level of paths that exceed the guard-interval period Gl of the delay profile zero; and
means for performing K · N-point Fourier-transformation processing on the delay profile that has been made zero to estimate channels for K · N number of sub carriers that correspond to said plurality of multi-carrier transmission symbols.
